# EUROPEAN PATENT SPECIFICATION

(11) **EP 3 170 881 B1**
(45) Date of publication and mention of the grant of the patent: **07.09.2022**
(21) Application number: 15822380.0
(22) Date of filing: 07.07.2015
(51) Int. Cl.: C10M 107/24, C09K 5/04, C10M 105/38, C10M 107/34, F25B 1/00, C10N 20/00, C10N 20/02, C10N 30/00, C10N 30/08, C10N 40/30

(54) **COMPOSITION AND USE THEREOF IN A REFRIGERATION DEVICE**
KÄLTEMASCHINENÖLZUSAMMENSETZUNG UND IHRE VERWENDUNG IN EINER KÜHLVORRICHTUNG
COMPOSITION ET SON UTILISATION DANS UN DISPOSITIF FRIGORIFIQUE

(30) Priority: 18.07.2014 JP 2014147615
(43) Date of publication of application: 24.05.2017
(73) Proprietor: Idemitsu Kosan Co., Ltd, Tokyo 100-8321 (JP)
(72) Inventor: MATSUMOTO, Tomoya, Ichihara-shi Chiba 299-0107 (JP)
(74) Representative: Hoffmann Eitle
(86) International application number: PCT/JP2015/069480
(87) International publication number: WO 2016/009884

(56) References cited:
- EP-A1- 2 975 102
- EP-A1- 3 045 515
- WO-A1-2008/153106
- WO-A1-2012/157764
- WO-A1-2012/157765
- WO-A1-2013/062058
- WO-A1-2013/062058
- JP-A- 2009 191 211
- JP-A- 2011 202 032
- JP-A- 2013 136 789
- JP-A- 2014 177 607
- JP-A- 2015 054 928
- US-A1- 2010 147 016
- US-A1- 2010 175 421
- US-A1- 2011 057 146
- US-A1- 2013 012 419
- US-A1- 2013 012 420
- US-A1- 2014 135 241

## Description

### TECHNICAL FIELD

The present invention relates to a composition, and to the use of the composition in a refrigeration device.

### BACKGROUND ART

In general, a compression-type refrigeration device includes at least a compressor, a condenser, an expansion mechanism (an expansion valve, etc.), an evaporator, and optionally a drier, and is so structured that a mixed liquid of a refrigerant and a refrigerator oil circulates in the closed system.

Heretofore, as a refrigerant for refrigeration devices, for example, chlorofluorocarbon (CFC), hydrochlorofluorocarbon (HCFC) or the like has been used. However, these refrigerants are compounds containing a chlorine atom, which cause environmental problems, and therefore, substitute refrigerants not containing a chlorine atom, such as hydrofluorocarbons (HFC) and the like, have been investigated.

As such hydrofluorocarbons, for example, saturated hydrofluorocarbon refrigerants such as 1,1,1,2-tetrafluoroethane (R134a), difluoromethane (R32), pentafluoroethane (R125), 1,1,1-trifluoroethane (R143a) and the like have become specifically noted, and for example, in car air-conditioner systems, R134a has been mainly used.

However, it is feared that such hydrofluorocarbons would also have some negative influences on global warming. For example, substitute refrigerants having a smaller global warming potential (GWP) than R134a are desired.

PTL 1 discloses an unsaturated fluorohydrocarbon refrigerant containing 1,1,2-tetrafluoroethane (R1123) as a refrigerant having a small global warming potential (GWP) and having little influence on global warming as compared with R134a or the like which has been used conventionally.

In a compression-type refrigeration device, in general, the temperature of the inside of a compressor is high while the temperature of the inside of a cooler is low, depending upon the kind of the device. Therefore, it is necessary that a mixed liquid of a refrigerant and a lubricating oil circulates through the refrigeration device without causing a phase separation in a wide temperature range from low temperatures to high temperatures. Phase separation between a refrigerant and a refrigerator oil, if occurring during refrigerator operation, would significantly shorten the life of the refrigeration device and lower the refrigeration efficiency. Consequently, the refrigerator oil is required to have excellent compatibility with the refrigerant to be used.

Further, once charged in a compression-type refrigeration device, the refrigerator oil is difficult to be changed, and is therefore required to have excellent thermal stability in such a degree that it would not degrade even in long-term use.

For example, PTL 2 discloses a lubricant for refrigerators containing a polyvinyl ether-type compound having a molar ratio of carbon/oxygen adjusted to fall within a specific range as a refrigerator oil having excellent compatibility with a difluoromethane (R32) refrigerant.

PTL 3 discloses a lubricant composition for refrigerators containing a specific oxygen-containing compound as the main component therein, as a refrigerator oil having excellent compatibility with a refrigerant having a specific polar structure, such as a fluoroether compound or the like, and being good in thermal stability and the like.

PTL 4 discloses a lubricating oil composition for a refrigerating machine, containing a base oil, and an organic compound having two or more non-conjugated double bonds in a molecule thereof.

PTL 5 discloses a lubricating oil composition for compression refrigerating machine which uses, as a refrigerant, a saturated fluorinated hydrocarbon having a low carbon number.

PTL 6 discloses a lubricating oil composition for refrigerators which comprises a base oil comprising a specific polyol ester compound as a main component and which is used for refrigerators using a specific refrigerant.

PTL 7 and PTL 8 disclose a lubricant composition which is used for a refrigerator using a specific refrigerant, and which uses a base oil mainly containing a specific polyoxyalkylene glycol derivative, and a compressor using the same.

PTL 9 discloses a working fluid composition for a refrigerating machine containing a refrigerant composed mainly of a mixture of difluoromethane and an unsaturated fluorinated hydrocarbon.

PTL 10 discloses a lubricating oil composition for a refrigerating machine that can be particularly used for a refrigerating machine using a refrigerant having a particular structure, such as an unsaturated fluorinated hydrocarbon.

PTL 11 discloses a refrigerating machine oil composition including a mixture of an unsaturated fluorinated hydrocarbon compound, a saturated fluorinated hydrocarbon compound, and CO₂, the composition containing a base oil which includes at least one selected from a polyoxyalkylene glycol, a polyvinyl ether, a copolymer of a poly(oxy)alkylene glycol or a monoether thereof and a polyvinyl ether, and a polyol ester and which has a kinematic viscosity at 100°C of 2 to 50 mm²/s and a hydroxyl value of 5 mgKOH/g or less.

PTL 12 discloses a refrigerator oil composition for a refrigerator in which a refrigerant containing as a major component at least one of a particular fluorine-containing organic compound is used, the composition containing a polyol ester compound and a polyoxyalkylene glycol compound as a base oil in a mass ratio of from 10/90 to 98/2.

### CITATION LIST

### PATENT LITERATURE

PTL 1: JP 2014-98166 A
PTL 2: WO 2014/051108
PTL 3: JP 2012-251170 A
PTL 4: US 2013/0012419 A1
PTL 5: US 2014/0135241 A1
PTL 6: US 2010/0147016 A1
PTL 7: US 2010/0175421 A1
PTL 8: US 2011/0057146 A1
PTL 9: WO 2013/062058 A1
PTL 10: US 2013/0012420 A1
PTL 11: EP 2 975 102 A1
PTL 12: EP 3 045 515 A1

### SUMMARY OF INVENTION

### TECHNICAL PROBLEM

PTL1 lists general oils, such as an oxygen-containing synthetic oil, a fluorine-containing lubricant oil, a mineral oil and others, as a refrigerator oil to be used in combination with a refrigerant containing 1,1,2-trifluoroethylene (R1123).

However, in PTL 1, nothing is investigated about the listed refrigerant oils in point of the compatibility thereof with an R1123 refrigerant, the thermal stability thereof and the like.

PTL 2 is a document relating to a refrigerator oil suitable for difluoromethanes (R32 refrigerants), and PTL 3 is a document relating to a refrigerator oil for use for a refrigerant such as a fluoroether compound or the like. In these patent documents, nothing is investigated about the compatibility between the refrigerator oil disclosed in each document and refrigerants such as R1123 or the like.

It is an object of the present invention to provide a refrigerator oil composition which is excellent in compatibility with a refrigerant containing an unsaturated fluorinated compound having a carbon number of 2 and having a specific atom and also excellent in thermal stability, and a refrigeration device using the refrigerator oil composition and the refrigerant containing the unsaturated fluorinated compound.

### SOLUTION TO PROBLEM

The present inventors have assiduously studied and, as a result, have found that a refrigerator oil composition containing a base oil selected from specific oxygen-containing compounds and having specific properties can solve the above-mentioned problems, and have completed the present invention.

Specifically, one aspect of the present invention provides the following [1] and [2].
[1] A composition comprising:
   (i) a refrigerant comprising an unsaturated fluorinated compound having a carbon-carbon unsaturated bond, which is represented by the following general formula (I):

      C₂FₚR₄₋ₚ (I)

      wherein R represents a hydrogen atom, and p represents an integer of 1 to 3; and
   (ii) a refrigerator oil composition comprising a base oil (P) which consists of a polyvinyl ether, a polyalkylene glycol, a copolymer of a poly(oxy)alkylene glycol or a monoether thereof and a polyvinyl ether, or a polyol ester;
   the base oil (P) having a kinematic viscosity at 100°C of 2.00 to 15.00 mm²/s and a hydroxyl value of 5.0 mgKOH/g or less.
[2] Use of the composition described in the above [1], for an air conditioner, a gas heat pump, a refrigerator, a vending machine, a show case, a water heater or a floor heating system.

### ADVANTAGEOUS EFFECTS OF INVENTION

The refrigerator oil composition comprised in the composition of the present invention is excellent in compatibility with a refrigerant containing an unsaturated fluorinated compound having a carbon number of 2 and having a specific atom and also excellent in thermal stability.

### DESCRIPTION OF EMBODIMENTS

In this description, "hydrocarbon group" means a group composed of only a carbon atom and a hydrogen atom. "Hydrocarbon group" includes "aliphatic group" having a linear or branched chain, "alicyclic group" having one or more, nonaromatic, saturated or unsaturated carbon rings, and "aromatic group" having one or more aromatic rings with aromaticity such as a benzene ring, etc.

In this description, the number of "ring carbon atoms" indicates the number of carbon atoms among the atoms constituting the ring itself of a compound having a structure of atoms bonding to each other in a ring form. In the case where the ring is substituted with a substituent, the carbons included in the substituent are not included in the ring carbon atoms.

The number of "ring atoms" indicates the number of atoms constituting the ring itself of a compound having a structure of atoms bonding to each other in a ring form. Atoms not forming a ring (for example, a hydrogen atom to end the bond of an atom constituting the ring), and atoms contained in a substituent, if any, of the ring substituted with the substituent are not included in the ring atoms.

As "substituent" relating to a wording of "substituted or unsubstituted", an alkyl group having a carbon number of 1 to 10 (preferably 1 to 6, more preferably 1 to 3), a cycloalkyl group having ring carbon atoms of 3 to 10 (preferably 3 to 8, more preferably 5 or 6), an aryl group having ring carbon atoms of 6 to 18 (preferably 6 to 12), a halogen atom (fluorine atom, chlorine atom, bromine atom, iodine atom), a cyano group, a nitro group, a hydroxyl group, an amino group, etc., can be exemplified.

These substituents may be further substituted with any arbitrary substituent mentioned above.

"Unsubstituted" in a wording of "substituted or unsubstituted" means that the group retains a bonding with a hydrogen atom without being substituted with such a substituent.

### [Refrigerator oil composition]

The refrigerator oil composition comprised in the composition of the present invention is one for use for a refrigerant containing an unsaturated fluorinated compound having a carbon-carbon unsaturated bond, which is represented by the above-mentioned general formula (I) (hereinafter this may also be referred to as "unsaturated fluorinated compound (I)").

C₂FₚR₄₋ₚ (I)

In the general formula (I), R each independently represents a hydrogen atom. p represents an integer of 1 to 3, and preferably 2 or 3.

In the case where the compound has plural R's, the plural R's may be the same as or different from each other. However, in one embodiment of the present invention where the compound has plural R's, it is preferred that the plural R's are the same as each other.

One alone or two or more kinds of the unsaturated fluorinated compounds (I) may be used either singly or as combined.

The unsaturated fluorinated compound (I) is a fluorine-containing ethylenic compound having one carbon-carbon unsaturated bond and having 1 to 3 (preferably 2 or 3) fluorine atoms.

The unsaturated fluorinated compound (I) is, from the viewpoint of providing a refrigerant having a small global warming potential (GWP), preferably one or more selected from monofluoroethylene (R1141), 1,1,2-trifluoroethylene (R1123), 1,1-difluoroethylene (R1132a) and 1,2-difluoroethylene (R1132), and more preferably 1,1,2-trifluoroethylene (R1123).

In particular, the refrigerator oil composition is excellent in compatibility with a refrigerant containing 1,1,2-trifluoroethylene (R1123) having a small global warming potential (GWP). Consequently, one embodiment of the refrigerator oil composition is preferably a refrigerator oil composition for a refrigerant containing 1,1,2-trifluoroethylene (R1123).

Also preferably, one embodiment of the refrigerator oil composition is a refrigerator oil composition for a refrigerant containing hydrofluorocarbon (HFC) along with the unsaturated fluorinated compound (I).

The hydrofluorocarbon (HFC) includes refrigerants mentioned hereinunder.

### [Refrigerator oil composition]

The refrigerator oil composition contains a base oil (P) which consists of a polyvinyl ether (PVE), a polyalkylene glycol (PAG), a copolymer (ECP) of a poly(oxy)alkylene glycol or a monoether thereof and a polyvinyl ether, or a polyol ester (POE).

Preferably, the base oil (P) contains, from the viewpoint of the good compatibility thereof with a refrigerant containing the unsaturated fluorinated compound (I) not depending on temperatures, and from the viewpoint of improving the thermal stability of the refrigerator oil composition, one or more kinds selected from PVE and PAG, more preferably the base oil is one or more kinds selected from PVE and PAG, even more preferably one or more kinds selected from PVE.

PVE, PAG, ECP and POE for constituting the base oil (P) are described below.

### <Polyvinyl ethers (PVE)>

The polyvinyl ethers (PVE) include polymers having one or more kinds of a structural unit derived from a vinyl ether. In the case where PVE is contained in the base oil (P), one alone or two or more types of PVE may be used therein either singly or as combined.

Among these PVE, from the viewpoint of compatibility with the refrigerant, polymers having one or more of a structural unit derived from a vinyl ether and having an alkyl group having 1 to 4 carbon atoms in a side chain thereof are preferred.

The alkyl group which the polymer has in a side chain thereof is, from the viewpoint of improving the compatibility with the refrigerant, preferably a methyl group or an ethyl group, and more preferably a methyl group.

Among PVE, a polymer (A1) having one or more of a structural unit represented by the following general formula (A-1) is preferred.

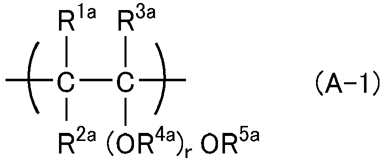

In the above formula (A-1), R^{1a}, R^{2a} and R^{3a} each independently represents a hydrogen atom, or a hydrocarbon group having 1 to 8 carbon atoms. R^{4a} represents a divalent hydrocarbon group having 2 to 10 carbon atoms. R^{5a} represents a hydrocarbon group having 1 to 10 carbon atoms.
r indicates a mean value of the number of units represented by OR^{4a}, and represents a number of 0 to 10, but is preferably a number of 0 to 5, more preferably a number of 0 to 3, even more preferably 0.

In the case where the general formula (A-1) has plural OR^{4a}'s, the plural OR^{4a}'s may be the same or different.

In the case where r is 0, the bond between the carbon atom (C) and -OR^{5a} in the general formula (A-1) is a single bond, and the carbon atom (C) bonds directly to -OR^{5a}.

Examples of the hydrocarbon group having 1 to 8 carbon atoms that can be selected for R^{1a}, R^{2a} and R^{3a} include an alkyl group such as a methyl group, an ethyl group, an n-propyl group, an isopropyl group, various types of butyl groups such as an n-butyl group, an isobutyl group, a sec-butyl group, a tert-butyl group, etc., various types of pentyl groups, various types of hexyl groups, various types of heptyl groups, various types of octyl groups, etc.; a cycloalkyl group such as a cyclopentyl group, a cyclohexyl group, various types of methylcyclohexyl groups, various types of ethylcyclohexyl groups, various types of dimethylcyclohexyl groups, etc.; an aryl group such as a phenyl group, various types of methylphenyl groups, various types of ethylphenyl groups, various types of dimethylphenyl groups, etc.; an arylalkyl group such as a benzyl group, various types of phenylethyl groups, various types of methylbenzyl groups, etc.

In this description, the expression of "various types of XXX groups" is to include all isomers that are considered as the XXX groups.

The carbon number of the hydrocarbon group that can be selected for R^{1a}, R^{2a} and R^{3a} is preferably 1 to 6, more preferably 1 to 4, even more preferably 1 to 3.

R^{1a}, R^{2a} and R^{3a} are each independently preferably a hydrogen atom or an alkyl group having 1 to 8 carbon atoms, more preferably a hydrogen atom or an alkyl group having 1 to 3 carbon atoms.

R^{1a}, R^{2a} and R^{3a} each may be the same or different.

Examples of the divalent hydrocarbon group having 2 to 10 carbon atoms that can be selected for R^{4a} include a divalent aliphatic group such as an ethylene group, a 1,2-propylene group, a 1,3-propylene group, various types of butylene groups, various types of pentylene groups, various types of hexylene groups, various types of heptylene groups, various types of octylene groups, various types of nonylene groups, various types of decylene groups, etc.; an alicyclic group that is a divalent residue of an alicyclic compound such as cyclohexane, methylcyclohexane, ethylcyclohexane, dimethylcyclohexane, propylcyclohexane, etc.; a divalent aromatic group such as various types of phenylene groups, various types of methylphenylene groups, various types of ethylphenylene groups, various types of dimethylphenylene groups, various types of naphthylene groups, etc.; a divalent alkyl-aromatic group having a monovalent bonding site in the alkyl group moiety and the aromatic moiety of an alkyl-aromatic hydrocarbon such as toluene, xylene, ethylbenzene, etc.; a divalent alkyl-aromatic group having a bonding site in the alkyl group moiety of a polyalkyl-aromatic hydrocarbon such as xylene, diethylbenzene, etc.

The carbon number of the hydrocarbon group that can be selected for R^{4a} is preferably 2 to 6, more preferably 2 to 4.

R^{4a} is preferably a divalent aliphatic group having 2 to 10 carbon atoms, more preferably a divalent aliphatic group having 2 to 4 carbon atoms.

Examples of the hydrocarbon group having 1 to 10 carbon atoms that can be selected for include an alkyl group such as a methyl group, an ethyl group, an n-propyl group, an isopropyl group, an n-butyl group, an isobutyl group, a sec-butyl group, a tert-butyl group, various types of pentyl groups, various types of hexyl groups, various types of heptyl groups, various types of octyl groups, various types of nonyl groups, various types of decyl groups, etc.; a cycloalkyl group such as a cyclopentyl group, a cyclohexyl group, various types of methylcyclohexyl groups, various types of ethylcyclohexyl groups, various types of propylcyclohexyl groups, various types of dimethylcyclohexyl groups, etc.; an aryl group such as a phenyl group, various types of methylphenyl groups, various types of ethylphenyl groups, various types of dimethylphenyl groups, various types of propylphenyl groups, various types of trimethylphenyl groups, various types of butylphenyl groups, various types of naphthyl groups, etc.; an arylalkyl group such as a benzyl group, various types of phenylethyl groups, various types of methylbenzyl groups, various types of phenylpropyl groups, various types of phenylbutyl groups, etc.

The carbon number of the hydrocarbon group that can be selected for is preferably 1 to 8, more preferably 1 to 6.

is, from the viewpoint of further improving the compatibility with refrigerants, preferably an alkyl group having 1 to 6 carbon atoms, more preferably an alkyl group having 1 to 4 carbon atoms, even more preferably a methyl group or an ethyl group, still more preferably a methyl group.

In one embodiment of the present invention, preferably, the polymer (A1) has a structural unit (α1) where is an ethyl group.

The content of the structural unit (α1) is, based on the total amount (100% by mass) of the structural units that the polymer (A1) has, preferably 30 to 100% by mass, more preferably 40 to 100% by mass, even more preferably 50 to 100% by mass.

In one embodiment of the present invention, the copolymer (A1) may be a copolymer having a structural unit (α1) where is an ethyl group and a structural unit (α2) where is a methyl group.

In this copolymer, the ratio by mass of the structural unit (α1) to the structural unit (α2) [α1/α2] is preferably 30/70 to 99/1, more preferably 40/60 to 95/5, even more preferably 50/50 to 90/10.

The total content of the structural units (α1) and (α2) in the polymer (A1) is, based on the total amount (100% by mass) of the structural units that the polymer (A1) has, preferably 70 to 100% by mass, more preferably 80 to 100% by mass, even more preferably 90 to 100% by mass, still more preferably 95 to 100% by mass.

In the polymer (A1), the number of structural units (polymerization degree) represented by the above-mentioned general formula (A-1) may be suitably set so that the kinematic viscosity at 100°C of the base oil (P) falls within a range of 2.00 to 50.00 mm²/s.

The polymer (A1) may be a homopolymer having only one kind of the structural unit represented by the general formula (A-1), or a copolymer having two or more kinds of the structural units.

The copolymerization morphology of the copolymer is not specifically limited, and may be any of a block copolymer, a random copolymer and a graft copolymer.

Into the terminal part of the polymer (A1), a monovalent group derived from saturated hydrocarbons, ethers, alcohols, ketones, amides, nitriles and the like may be introduced.

In one embodiment of the present invention, one terminal of the polymer (A1) is preferably a group represented by the following general formula (A-1-i):

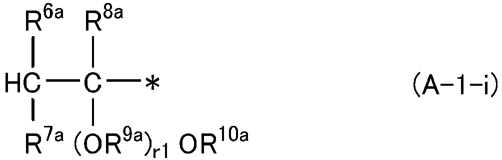

In the above general formula (A-1-i), ^{∗} indicates the bonding position to the carbon atom in the structural unit represented by the above general formula (A-1).

In the general formula (A-1-i), R^{6a}, R^{7a} and R^{8a} each independently represents a hydrogen atom, or a hydrocarbon group having 1 to 8 carbon atoms, but is preferably a hydrogen atom or a hydrocarbon group having 1 to 6 carbon atoms, more preferably a hydrogen atom or an alkyl group having 1 to 3 carbon atoms.

R^{6a}, R^{7a} and R^{8a} each may be the same or different.

As the hydrocarbon group having 1 to 8 carbon atoms that can be selected for R^{6a}, R^{7a} and R^{8a}, there are mentioned the same ones as those listed as the hydrocarbon group having 1 to 8 carbon atoms that can be selected for R^{1a}, R^{2a} and R^{3a} in the above-mentioned general formula (A-1).

In the above general formula (A-1-i), R^{9a} represents a divalent hydrocarbon group having 2 to 10 carbon atoms, but is preferably a divalent hydrocarbon group having 2 to 6 carbon atoms, more preferably a divalent aliphatic group having 2 to 4 carbon atoms.
r1 indicates a mean value of the number of units represented by OR^{9a}, and represents a number of 0 to 10, but is preferably a number of 0 to 5, more preferably a number of 0 to 3, even more preferably 0.

In the case where the general formula (A-1-i) has plural OR^{9a}'s, the plural OR^{9a}'s may be the same or different.

In the case where r1 is 0, the bond between the carbon atom (C) and -OR^{10a} in the general formula (A-1-i) is a single bond, and the carbon atom (C) bonds directly to -OR^{10a}.

As the divalent hydrocarbon group having 2 to 10 carbon atoms that can be selected for R^{9a}, there are mentioned the same ones as those listed as the divalent hydrocarbon group having 2 to 10 carbon atoms that can be selected for R^{4a} in the above-mentioned general formula (A-1).

In the general formula (A-1-i), R^{10a} represents a hydrocarbon group having 1 to 10 carbon atoms, but is preferably a hydrocarbon group having 1 to 8 carbon atoms, more preferably an alkyl group having 1 to 8 carbon atoms.

In the case where r1 in the general formula (A-1-i) is 0, R^{10a} is preferably an alkyl group having 1 to 6 carbon atoms, but where r1 is 1 or more, the group is preferably an alkyl group having 1 to 4 carbon atoms.

As the hydrocarbon group having 1 to 10 carbon atoms that can be selected for R^{10a}, there are mentioned the same ones as those listed for the hydrocarbon group having 1 to 10 carbon atoms that can be selected for in the above general formula (A-1).

Preferably in the polymer (A1), one terminal is a group represented by the above general formula (A-1-i), and the other terminal is any of a group represented by the above general formula (A-1-i), a group represented by the following general formula (A-1-ii), a group represented by the following general formula (A-1-iii) or a group having an olefinic unsaturated bond.

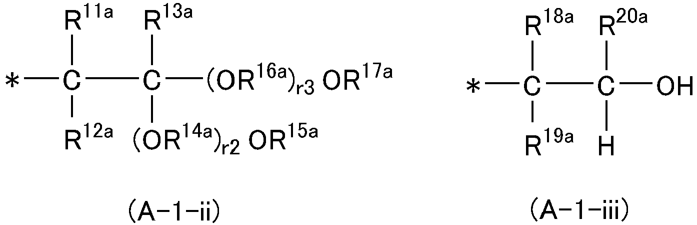

In the above general formulae (A-1-ii) and (A-1-iii), R^{11a}, R^{12a}, R^{13a}, R^{18a}, R^{19a} and R^{20a} each independently represents a hydrogen atom, or a hydrocarbon group having 1 to 8 carbon atoms, preferably a hydrogen atom or a hydrocarbon group having 1 to 6 carbon atoms, more preferably a hydrogen atom or an alkyl group having 1 to 3 carbon atoms. These each may be the same or different.

As the hydrocarbon group that can be selected for R^{11a}, R^{12a}, R^{13a}, R^{18a}, R^{19a} and R^{20a}, there are mentioned the same ones as those listed hereinabove as the hydrocarbon group having 1 to 8 carbon atoms that can be selected for R^{1a}, R^{2a} and R^{3a} in the above-mentioned general formula (A-1).

In the general formula (A-1-ii), R^{14a} and R^{16a} each independently represents a divalent hydrocarbon group having 2 to 10 carbon atoms, preferably a divalent hydrocarbon group having 2 to 6 carbon atoms, more preferably a divalent aliphatic group having 2 to 4 carbon atoms. As the divalent hydrocarbon group that can be selected for R^{14a} and R^{16a}, there are mentioned the same ones as those listed hereinabove as the divalent hydrocarbon group that can be selected for R^{4a} in the above-mentioned general formula (A-1).
r2 and r3 each represents a mean value of the number of units represented by OR^{14a} and OR^{16a}, and each independently represents a number of 0 to 10, preferably a number of 0 to 5, more preferably a number of 0 to 3, even more preferably 0.

In the case where the general formula (A-1-ii) has plural OR^{14a}'s and OR^{16a}'s, the plural OR^{14a}'s and the plural OR^{16a}'s each may be the same or different.

In the case where r2 is 0, the bond between the carbon atom (C) and -OR^{15a} in the general formula (A-1-ii) is a single bond, and the carbon atom (C) bonds directly to -O15^{15a}. Similarly, in the case where r3 is 0, the bond between the carbon atom (C) and -OR^{17a} in the general formula (A-1-ii) is a single bond, and the carbon atom (C) bonds directly to -O15^{17a}.

R^{15a} and R^{17a} each independently represents a hydrocarbon group having 1 to 10 carbon atoms, preferably a hydrocarbon group having 1 to 8 carbon atoms, more preferably an alkyl group having 1 to 8 carbon atoms.

In the case where r2 is 0, R^{15a} is preferably an alkyl group having 1 to 6 carbon atoms, and in the case where r2 is 1 or more, the group is preferably an alkyl group having 1 to 4 carbon atoms. Similarly, in the case where r3 is 0, R^{17a} is preferably an alkyl group having 1 to 6 carbon atoms, and in the case where r3 is 1 or more, the group is preferably an alkyl group having 1 to 4 carbon atoms.

### <Polyoxyalkylene glycols (PAG)>

The polyoxyalkylene glycols (PAG) are preferably compounds (B1) represented by the following general formula (B-1). In the case where PAG is contained in the base oil (P), one alone or two or more PAGs may be used either singly or as combined.

R^{1b}-[(OR^{2b})ₘ-OR^{3b}]ₙ (B-1)

In the above formula (B-1), R^{1b} represents a hydrogen atom, a monovalent hydrocarbon group having 1 to 10 carbon atoms, an acyl group having 2 to 10 carbon atoms, a di- to hexavalent hydrocarbon group having 1 to 10 carbon atoms, or a substituted or unsubstituted heterocyclic group having ring atoms of 3 to 10.

R^{2b} represents an alkylene group having 2 to 4 carbon atoms.

R^{3b} represents a hydrogen atom, a monovalent hydrocarbon group having 1 to 10 carbon atoms, an acyl group having 2 to 10 carbon atoms, or a substituted or unsubstituted heterocyclic group having ring atoms of 3 to 10.
n represents an integer of 1 to 6, preferably an integer of 1 to 3, more preferably 1.
n is defined in accordance with the number of the bonding sites of R^{1b} in the above general formula (B-1). For example, in the case where R^{1b} is an alkyl group or an acyl group, n is 1, where R^{1b} is a hydrocarbon group or a heterocyclic group and the valence of the group is 2, 3, 4, 5 or 6-valent, n is 2, 3, 4, 5 or 6, respectively.
m is a mean value of the number of the units represented by OR^{2b}, indicating a number of 1 or more, and is preferably a number to make the mean value of m × n fall within a range of 6 to 80. The value of m is one which is suitably so defined that the kinematic viscosity at 100°C of the base oil (P) falls within a range of 2.00 to 50.00 mm²/s, and is not specifically limited so far as the kinematic viscosity is controlled to fall within the predetermined range.

In the case where the formula has plural OR^{2b}'s, the plural OR^{2b}'s may be the same or different. In the case where n is 2 or more, plural R^{3b}'s in one molecule may be the same or different.

Examples of the monovalent hydrocarbon group that can be selected for R^{1b} and R^{3b} include an alkyl group such as a methyl group, an ethyl group, an n-propyl group, an isopropyl group, an n-butyl group, an isobutyl group, a sec-butyl group, a tert-butyl group, various types of pentyl groups, various types of hexyl groups, various types of heptyl groups, various types of octyl groups, various types of nonyl groups, various types of decyl groups, etc.; a cycloalkyl group such as a cyclopentyl group, a cyclohexyl group, various types of methylcyclohexyl groups, various types of ethylcyclohexyl groups, various types of propylcyclohexyl groups, various types of dimethylcyclohexyl groups, etc.; an aryl group such as a phenyl group, various types of methylphenyl groups, various types of ethylphenyl groups, various types of dimethylphenyl groups, various types of propylphenyl groups, various types of trimethylphenyl groups, various types of butylphenyl groups, various types of naphthyl groups, etc.; an arylalkyl group such as a benzyl group, various types of phenylethyl groups, various types of methylbenzyl groups, various types of phenylpropyl groups, various types of phenylbutyl groups, etc. The alkyl group may be any of a linear-chain or branched-chain one.

The carbon number of the monovalent hydrocarbon group is, from the viewpoint of the compatibility with refrigerants, preferably 1 to 10, more preferably 1 to 6, even more preferably 1 to 3.

The hydrocarbon group moiety that the acyl group having 2 to 10 carbon atoms has and capable of being selected for R^{1b} and R^{3b} may be any of a linear-chain, branched-chain or cyclic one. The alkyl group moiety includes those having 1 to 9 carbon atoms of the hydrocarbon group that can be selected for R^{1b} and R^{3b}.

The carbon number of the acyl group is, from the viewpoint of the compatibility with refrigerants, preferably 2 to 10, more preferably 2 to 6.

The 2 to 6-valent hydrocarbon group that can be selected for R^{1b} includes residues to be derived from the monovalent hydrocarbon group capable of being selected for R^{1b} by further removing 1 to 5 hydrogen atoms therefrom, as well as residues to be derived by removing a hydroxyl group from a polyalcohol such as trimethylolpropane, glycerin, pentaerythritol, sorbitol, 1,2,3-trihydroxycyclohexane, 1,3,5-trihydroxycyclohexane, etc.

The carbon number of the 2 to 6-valent hydrocarbon group is, from the viewpoints of the compatibility with refrigerants, preferably 2 to 10, more preferably 2 to 6.

The heterocyclic group that can be selected for R^{1b} and R^{3b} is preferably an oxygen atom-containing heterocyclic group or a sulfur atom-containing heterocyclic group. The heterocyclic group may be a saturated ring or an unsaturated ring.

Examples of the oxygen atom-containing heterocyclic group include residues to be derived from an oxygen atom-containing saturated hetero ring, such as ethylene oxide, 1,3-propylene oxide, tetrahydrofuran, tetrahydropyran, hexamethylene oxide or the like, or from an oxygen-containing unsaturated hetero ring such as acetylene oxide, furan, pyran, oxycycloheptatriene, isobenzofuran, isochromene or the like, by removing 1 to 6 hydrogen atoms therefrom.

Examples of the sulfur atom-containing heterocyclic group include residues to be derived from a sulfur atom-containing saturated hetero ring, such as ethylene sulfide, trimethylene sulfide, tetrahydrothiophene, tetrahydrothiopyran, hexamethylene sulfide or the like, or from a sulfur-containing unsaturated hetero ring such as acetylene sulfide, thiophene, thiapyran, thiopyridone or the like, by removing 1 to 6 hydrogen atoms therefrom.

The heterocyclic group that can be selected for R^{1b} and R^{3b} may have a substituent, and the substituent may bond to the oxygen atom in the general formula (B-1). The substituent is as mentioned above, and is preferably an alkyl group having 1 to 6 carbon atoms, more preferably an alkyl group having 1 to 3 carbon atoms.

The number of the ring atoms of the heterocyclic group is, from the viewpoint of the compatibility with refrigerants, preferably 3 to 10, more preferably 3 to 6.

Examples of the alkylene group that can be selected for R^{2b} include an alkylene group having 2 carbon atoms such as a dimethylene group (-CH₂CH₂-), an ethylene group (-CH(CH₃)-), etc.; an alkylene group having 3 carbon atoms such as a trimethylene group (-CH₂CH₂CH₂-), a propylene group (-CH(CH₃)CH₂-), a propylidene group (-CHCH₂CH₃-), an isopropylidene group (-C(CH₃)₂-), etc.; and an alkylene group having 4 carbon atoms such as a tetramethylene group (-CH₂CH₂CH₂CH₂-), a 1-mehtyltrimehtylene group (-CH(CH₃)CH₂CH₂-), a 2-methyltrimethylene group (-CH₂CH(CH₃)CH₂-), a butylene group (-C(CH₃)₂CH₂-), etc.

In the case where the formula has plural R^{2b}'s, the plural R^{2b}'s may be the same or different, or may be a combination of two or more kinds of alkylene groups.

Among these, R^{2b} is preferably a propylene group (-CH(CH₃)CH₂-).

In the compound (B1) represented by the above general formula (B-1), the content of the oxypropylene unit (-OCH(CH₃)CH₂-) is, based on the total amount (100 mol%) of the oxyalkylene unit (OR^{2b}) in the compound (B1), preferably 50 to 100 mol%, more preferably 65 to 100 mol%, even more preferably 80 to 100 mol%.

Among the compound (B1), one or more kinds selected from polyoxypropylene glycol dimethyl ether represented by the following general formula (B-1-i), polyoxyethylene-polyoxypropylene glycol dimethyl ether represented by the following general formula (B-1-ii), polyoxypropylene glycol monobutyl ether represented by the following general formula (B-1-iii), and polyoxypropylene glycol diacetate are preferred.

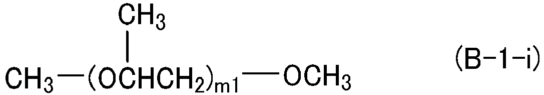

In the formula (B-1-i), m1 means a mean value of the number of oxypropylene units, indicating a number of 1 or more, and is preferably 6 to 80. 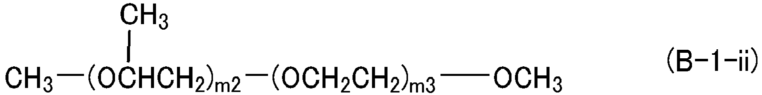 In the formula (B-1-ii), m2 and m3 each mean a mean value of the number of oxypropylene units and that of oxyethylene units, respectively, each independently indicating a number of 1 or more, preferably a number to make a value of m2 + m3 fall within a range of 6 to 80.

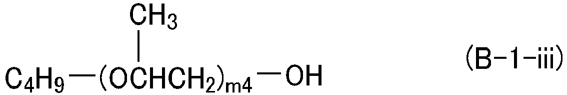

In the formula (B-1-iii), m4 means a mean value of the number of oxypropylene units, indicating a number of 1 or more, and is preferably a number of 6 to 80.
m1 in the above formula (B-1-i), m2 and m3 in the above formula (B-1-ii), and m4 in the above formula (B-1-iii) each are a value to be suitably so set that the kinematic viscosity at 100°C of the base oil (P) falls within a range of 2.00 to 50.00 mm²/s, and so far as the kinematic viscosity is controlled so as to fall within the predetermined range, these values are not specifically limited.

### Copolymer (ECP) of poly(oxy)alkylene glycol or monoether thereof and polyvinyl ether

The copolymer (ECP) of a poly(oxy)alkylene glycol or a monoether thereof and a polyvinyl ether may be any copolymer having a structural unit derived from a poly(oxy)alkylene glycol or a monoether thereof, and a structural unit derived from a polyvinyl ether.

"Poly(oxy)alkylene glycol" indicates both polyalkylene glycol and polyoxyalkylene glycol.

In the case where ECP is contained in the base oil (P), one alone or two or more kinds of ECP may be used either singly or as combined.

Among such ECP, a copolymer (C1) represented by the following general formula (C-1) or a copolymer (C2) represented by the following general formula (C-2) is preferred.

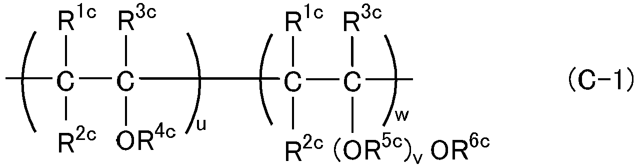

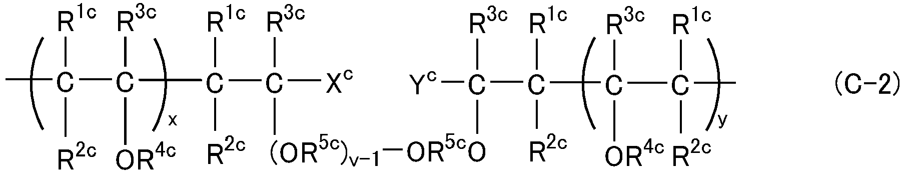

In the above formulae (C-1) and (C-2), R^{1c}, R^{2c} and R^{3c} each independently represents a hydrogen atom or a hydrocarbon group having 1 to 8 carbon atoms.

R^{4c} each independently represents a hydrocarbon group having 1 to 10 carbon atoms.

R^{5c} each independently represents an alkylene group having 2 to 4 carbon atoms.

R^{6c} each independently represents a hydrogen atom, an alkyl group having 1 to 20 carbon atoms, a substituted or unsubstituted alicyclic group having ring carbon atoms of 3 to 20, a substituted or unsubstituted aromatic group having ring carbon atoms of 6 to 24, an acyl group having 2 to 20 carbon atoms, or an oxygen-containing hydrocarbon group having 2 to 50 carbon atoms.

In the case where the formulae have plural R^{1c}, R^{2c}, R^{3c}, R^{4c}, R^{5c} and R^{6c}, these may be the same or different in each structural unit.

X^{C} and Y^{C} each independently represents a hydrogen atom, a hydroxyl group, or a hydrocarbon group having 1 to 20 carbon atoms.
v in the above formulae (C-1) and (C-2) is a mean value of the number of the units represented by OR^{5c}, indicating a number of 1 or more, and is preferably 1 to 50. In the case where the formulae have plural OR^{5c}'s, the plural OR^{5c}'s may be the same or different. "OR^{5c}" indicates a structural unit derived from a poly(oxy)alkylene glycol or a monoether thereof.
u in the above formula (C-1) represents a number of 0 or more, and is preferably 0 to 50; and w represents a number of 1 or more, and is preferably 1 to 50.
x and y in the above formula (C-2) each independently represents a number of 1 or more, and preferably 1 to 50.

The values of v, u, w, x and y are suitably set so that the kinematic viscosity at 100°C of the base oil (P) falls within a range of 2.00 to 50.00 mm²/s, and are not specifically limited so far as the values are set so that the kinematic viscosity falls within the predetermined range.

The copolymerization morphology of the copolymer (C1) and the copolymer (C2) is not specifically limited, and may be any of a block copolymer, a random copolymer and a graft copolymer.

As the hydrocarbon group having 1 to 8 carbon atoms that can be selected for R^{1c}, R^{2c} and R^{3c}, there are mentioned the same ones as those to be mentioned for the monovalent hydrocarbon group having 1 to 8 carbon atoms that can be selected for R^{1a}, R^{2a} and R^{3a} in the above-mentioned general formula (A-1).

The carbon number of the hydrocarbon group that can be selected for R^{1c}, R^{2c} and R^{3c} is preferably 1 to 8, more preferably 1 to 6, even more preferably 1 to 3.

Preferably, R^{1c}, R^{2c} and R^{3c} each are independently a hydrogen atom or an alkyl group having 1 to 8 carbon atoms, more preferably a hydrogen atom or an alkyl group having 1 to 3 carbon atoms.

Also preferably, at least one of R^{1c}, R^{2c} and R^{3c} is a hydrogen atom, and more preferably all R^{1c}, R^{2c} and R^{3c} are hydrogen atoms.

As the hydrocarbon group having 1 to 10 carbon atoms that can be selected for R^{4c}, there are mentioned the same ones as those mentioned for the hydrocarbon group having 1 to 10 carbon atoms that can be selected for in the above-mentioned general formula (A-1).

The carbon number of the hydrocarbon group that can be selected for R^{4c} is preferably 1 to 8, more preferably 1 to 6, even more preferably 1 to 4.

As the alkylene group that can be selected for R^{5c}, there are mentioned the same ones as those mentioned for the alkylene group having 2 to 4 carbon atoms that can be selected for R^{2b} in the above-mentioned general formula (B-1), and a propylene group (-CH(CH₃)CH₂-) is preferred.

In the copolymer (C1) and the copolymer (C2), the content of the oxypropylene unit (-OCH(CH₃)CH₂-) is, based on the total amount (100 mol%) of oxyalkylene (OR^{5b}) that is a structural unit derived from poly(oxy)alkylene glycol or monoether thereof in the copolymer (C1) or the copolymer (C2), preferably 50 to 100 mol%, more preferably 65 to 100 mol%, even more preferably 80 to 100 mol%.

Examples of the alkyl group having 1 to 20 carbon atoms that can be selected for R^{6c} include a methyl group, an ethyl group, an n-propyl group, an isopropyl group, an n-butyl group, an isobutyl group, a sec-butyl group, a tert-butyl group, various kinds of pentyl groups, various kinds of hexyl groups, various types of heptyl groups, various types of octyl groups, various types of nonyl groups, various types of decyl groups, etc.

The carbon number of the alkyl group is preferably 1 to 10, more preferably 1 to 6, even more preferably 1 to 3.

Examples of the alicyclic group having ring carbon atoms of 3 to 20 that can be selected for R^{6c} include a cyclopropyl group, a cyclobutyl group, a cyclopentyl group, a cyclohexyl group, a cycloheptyl group, a cyclooctyl group, a cyclononyl group, a cyclodecyl group, etc.

The number of the ring carbon atoms of the alicyclic group is preferably 3 to 10, more preferably 3 to 6.

The alicyclic group may have any substituent mentioned above, and as the substituent, an alkyl group is preferred.

Examples of the aromatic group having 6 to 24 carbon atoms that can be selected for R^{6c} include a phenyl group, a naphthyl group, an anthracenyl group, a phenanthryl group, etc.

The number of the ring carbon atoms of the aromatic group is preferably 6 to 18, more preferably 6 to 12.

The aromatic group may have any substituent mentioned above, and as the substituent, an alkyl group is preferred.

Examples of the acyl group having carbon atoms of 2 to 20 that can be selected for R^{6c} include an acetyl group, a propionyl group, a butyryl group, an isobutyryl group, a valeryl group, an isovaleryl group, a pivaloyl group, a benzoyl group, a toluoyl group, etc.

The carbon number of the acyl group is preferably 2 to 10, more preferably 2 to 6.

Examples of the oxygen-containing hydrocarbon group having 2 to 50 carbon atoms that can be selected for R^{6c} include a methoxymethyl group, a methoxyethyl group, a methoxypropyl group, 1,1-bismethoxypropyl group, 1,2-bismethoxypropyl group, an ethoxypropyl group, (2-methoxyethoxy)propyl group, (1-methyl-2-methoxy)propyl group, etc.

The carbon number of the oxygen -containing hydrocarbon group is preferably 2 to 20, more preferably 2 to 10, even more preferably 2 to 6.

The hydrocarbon group having 1 to 20 carbon atoms that can be selected for X^{C} and Y^{C} includes an alkyl group having a carbon number of 1 to 20 (preferably 1 to 10, more preferably 1 to 6, even more preferably 1 to 3), a substituted or unsubstituted cycloalkyl group having ring carbon atoms of 3 to 20 (preferably 3 to 10, more preferably 3 to 6), a substituted or unsubstituted phenyl group, a substituted or unsubstituted naphthyl group, an arylalkyl group having a carbon number of 7 to 20 (preferably 7 to 13), etc.

### (Polyol esters (POE))

Examples of the polyol esters (POE) include esters of a diol or a polyol and a fatty acid. In the case where POE is contained in the base oil (P), one alone or two or more kinds of POE may be contained therein.

Among such POE, an ester of a diol or a polyol having 3 to 20 hydroxyl groups and a fatty acid having 3 to 20 carbon atoms is preferred.

Examples of the diol include ethylene glycol, 1,3-propanediol, propylene glycol, 1,4-butanediol, 1,2-butanediol, 2-methyl-1,3-propanediol, 1,5-pentanediol, neopentyl glycol, 1,6-hexanediol, 2-ethyl-2-methyl-1,3 -propanediol, 1,7-heptanediol, 2-methyl-2propyl-1,3-propanediol, 2,2-diethyl-1,3-propanediol, 1,8-octanediol, 1,9-nonanediol, 1,10-decanediol, 1,11-undecanediol, 1,12-dodecanediol, etc.

Examples of the polyol include polyalcohols such as trimethylolethane, trimethylolpropane, trimethylolbutane, di-(trimethylolpropane), tri-(trimethylolpropane), pentaerythritol, di-(pentaerythritol), tri-(pentaerythritol), glycerin, polyglycerin (2 to 20-mers of glycerin), 1,3,5-pentanetriol, sorbitol, sorbitan, sorbitol-glycerin condensate, adonitol, arabitol, xylitol, mannitol, etc.; saccharides such as xylose, arabinose, ribose, rhamnose, glucose, fructose, galactose, mannose, sorbose, cellobiose, maltose, isomaltose, trehalose, sucrose, raffinose, gentianose, melenzitose, etc.; as well as partially-esterified derivatives and methyl glucosides (glycosides) thereof, etc.

Among these, hindered alcohols such as neopentyl glycol, trimethylolethane, trimethylolpropane, trimethylolbutane, di-(trimethylolpropane), tri-(trimethylolpropane), pentaerythritol, di-(pentaerythritol), tri-(pentaerythritol) and the like are preferred.

The carbon number of the fatty acid is, from the viewpoint of lubrication performance, preferably 3 or more, more preferably 4 or more, even more preferably 5 or more, further more preferably 8 or more, and from the viewpoint of compatibility with refrigerants, the carbon number is preferably 20 or less, more preferably 16 or less, even more preferably 12 or less, further more preferably 10 or less.

The carbon number of the fatty acid includes the carbon atom of the carboxyl group (-COOH) that the fatty acid has.

The fatty acid may be any of a linear fatty acid or a branched fatty acid, but from the viewpoint of lubrication performance, a linear fatty acid is preferred, and from the viewpoint of hydrolysis stability, a branched fatty acid is preferred. Further, the acid may be any of a saturated fatty acid or an unsaturated fatty acid.

Examples of the fatty acid include linear or branched ones such as isobutyric acid, propionic acid, butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, oleic acid, etc., as well as neo acids in which the α-carbon atom is quaternized, etc.

More specifically, isobutyric acid, valeric acid (n-pentanoic acid), caproic acid (n-hexanoic acid), enanthic acid (n-heptanoic acid), caprylic acid (n-octanoic acid), pelargonic acid (n-nonanoic acid), capric acid (n-decanoic acid), oleic acid (cis-9-octadenoic acid), isopentanoic acid (3-methylbutanoic acid), 2-methylhexanoic acid, 2-ethylpentanoic acid, 2-ethylhexanoic acid, 3,5,5-trimehtylhexanoic acid and the like are preferred.

POE may be a partial ester where all hydroxyl groups of a polyol have not been esterified but have partially remained as such, or a complete ester where all hydroxyl groups have been esterified, or may also be a mixture of a partial ester and a complete ester, but is preferably a complete ester.

Among POE, from the viewpoint of performance of more excellent hydrolysis stability, esters of hindered alcohols such as neopentyl glycol, trimethylolethane, trimethylolpropane, trimethylolbutane, di-(trimethylolpropane), tri-(trimethylolpropane), pentaerythritol, di-(pentaerythritol), tri-(pentaerythritol) and the like are preferred, and esters of neopentyl glycol, trimethylolethane, trimethylolpropane, trimethylolbutane or pentaerythritol are more preferred, and from the viewpoint of performance of especially excellent compatibility with refrigerants and of hydrolysis stability, esters of pentaerythritol are even more preferred.

Preferred examples of POE include diesters of neopentyl glycol with one or more fatty acids selected from isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimehtylhexanoic acid; triesters of trimethylolethane with one or more fatty acids selected from isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimehtylhexanoic acid; triesters of trimethylolpropane with one or more fatty acids selected from isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimehtylhexanoic acid; triesters of trimethylolbutane with one or more fatty acids selected from isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimehtylhexanoic acid; tetraesters of pentaerythritol with one or more fatty acids selected from isobutyric acid, valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid and 3,5,5-trimehtylhexanoic acid, etc.

Esters with two or more fatty acids may be those prepared by blending two or more types of esters each composed of one type of fatty acid and one type of polyol. Among POE, from the viewpoint of improved low-temperature characteristics and good compatibility with refrigerants, esters of a polyol and a mixture of two or more types of fatty acids are preferred, and esters of a polyol having a hydroxyl group number of 2 to 20 and a mixture of two or more types of fatty acids having a carbon number of 3 to 20 are more preferred.

### [Properties of base oil (P)]

The kinematic viscosity at 100°C of the base oil (P) contained in the refrigerator oil composition is 2.00 to 15.00 mm²/s.

When the kinematic viscosity is less than 2.00 mm²/s, the lubrication performance (load bearing quality) and the sealing performance of the composition may tend to worsen. On the other hand, when the kinematic viscosity is more than 50.00 mm²/s, the compatibility of the composition with a refrigerant containing an unsaturated fluorinated compound (I) represented by the above general formula (I) may worsen.

Consequently, the kinematic viscosity at 100°C of the base oil (P) is, from the viewpoint of improving the lubrication performance (load bearing quality) and the sealing performance, preferably 3.00 mm²/s or more, more preferably 4.00 mm²/s or more, even more preferably 5.00 mm²/s or more, and from the viewpoint of good compatibility with refrigerants containing the unsaturated fluorinated compound (I) irrespective of temperatures, 15.00 mm²/s or less.

The viscosity index of the base oil (P) contained in the refrigerator oil composition is preferably 60 or more, more preferably 70 or more, even more preferably 80 or more.

In this description, the kinematic viscosity and the viscosity index of the base oil (P) mean values measured using a glass capillary viscometer according to JIS K2283:1983.

The hydroxyl value of the base oil (P) contained in the refrigerator oil composition is 5.0 mgKOH/g or less.

When the hydroxyl value of the base oil (P) is more than 5.0 mgKOH/g, the thermal stability of the refrigerator oil composition worsens, thereby causing increase in the acid value of the base oil and discoloration of the refrigerator oil composition.

Consequently, the hydroxyl value of the base oil is, from the viewpoint of improving the thermal stability of the refrigerator oil composition, preferably 4.5 mgKOH/g or less, more preferably 4.0 mgKOH/g or less, even more preferably 3.5 mgKOH/g or less, still more preferably 3.0 mgKOH/g or less.

In this description, the hydroxyl value of the base oil (P) means a value measured through neutralization titration according to JIS K0070:1992.

In one embodiment of the present invention, the acid value of the base oil (P) is preferably 0.1 mgKOH/g or less, more preferably 0.05 mgKOH/g or less.

In this description, the acid value of the base oil (P) means a value measured through indicator photometric titration according to JIS K2501:2003 (see Annex 1 in the forgoing JIS provision).

In one embodiment of the present invention, the water content of the base oil (P) is, from the viewpoint of improving thermal stability, hydrolysis stability and electric insulation, preferably 500 ppm or less, more preferably 400 ppm or less, even more preferably 300 ppm or less.

In this description, the water content of the base oil (P) means a value measured through Karl-Fischer moisture titration according to JIS K2275:1996.

In one embodiment of the present invention, the volume resistivity of the base oil (P) is, from the viewpoint of preventing leak current, preferably 0.01 (TΩ·m) or more, more preferably 0.05 (TΩ·m) or more, even more preferably 0.1 (TΩ·m) or more.

In this description, the volume resistivity of the base oil (P) means a value measured according to JIS C 2101:2010.

In one embodiment of the present invention, the surface tension of the base oil (P) is, from the viewpoint of efficiently circulating the base oil in a refrigeration cycle along with a refrigerant therein, preferably 0.02 to 0.04 (N/m).

In this description, the surface tension of the base oil (P) means a value measured according to JIS K2241:2000.

The refrigerator oil composition may contain any other base oil than the base oil (P) within a range not detracting from the advantageous effects of the present invention.

Examples of other base oil than the base oil (P) include synthetic oils such as polyesters, polycarbonates, α-olefin oligomer hydrides, alicyclic hydrocarbon compounds, alkylated aromatic hydrocarbon compounds and the like not corresponding to the base oil (P), and mineral oils.

The content of the base oil (P) in the base oil contained in the refrigerator oil composition is, based on the total amount (100% by mass) of the base oil contained in the refrigerator oil composition, preferably 50 to 100% by mass, more preferably 70 to 100% by mass, even more preferably 90 to 100% by mass, still more preferably 98 to 100% by mass, especially preferably 100% by mass.

The base oil contained in one embodiment of the refrigerator oil composition is preferably a base oil containing a polyvinyl ether in an amount of 90 to 100% by mass (preferably 98 to 100% by mass), a base oil containing a polyalkylene glycol in an amount of 90 to 100% by mass (preferably 98 to 100% by mass), a base oil containing a copolymer of a poly(oxy)alkylene glycol or a monoether thereof and a polyvinyl ether in an amount of 90 to 100% by mass (preferably 98 to 100% by mass), or a base oil containing a polyol ester in an amount of 90 to 100% by mass (preferably 98 to 100% by mass).

In particular, the base oil contained in one embodiment of the refrigerator oil composition is more preferably a base oil composed of a polyvinyl ether alone, a base oil composed of a polyalkylene glycol alone, a base oil composed of a copolymer of a poly(oxy)alkylene glycol or a monoether thereof and a polyvinyl ether, or a base oil composed of a polyol ester.

The content of the base oil containing the base oil (P) in the refrigerator oil composition is, based on the total amount (100% by mass) of the refrigerator oil composition, preferably 90% by mass or more, more preferably 95% by mass or more, even more preferably 97% by mass or more.

### [Additives]

The composition of the present invention may contain any other ordinary additive within a range not detracting from the advantageous effects of the present invention.

As such additives, the composition preferably contains one or more additives selected from the group consisting of an extreme pressure agent, an antioxidant, an acid scavenger, an oxygen scavenger, a metal deactivator, a rust inhibitor, an oily agent and an antifoaming agent, more preferably contains at least an extreme pressure agent, an antioxidant and an acid scavenger.

The total content of these additives is, based on the total amount (100% by mass) of the refrigerator oil composition, preferably 0 to 10% by mass, more preferably 0.01 to 5% by mass, even more preferably 0.1 to 3% by mass.

### <Extreme pressure agent>

As the extreme pressure agent, a phosphorus-containing extreme pressure agent, a metal salt of a carboxylic acid and a sulfur-containing extreme pressure agent are preferred.

Examples of the phosphorus-containing extreme pressure agent include phosphates, acidic phosphates, phosphites, acidic phosphites, and amine salts thereof, etc.

Among these, from the viewpoint of improving extreme pressure performance and friction characteristics, one or more selected from tricresyl phosphate, trithiophenyl phosphate, tri(nonylphenyl) phosphite, dioleyl hydrogenphosphite, and 2-ethylhexyl diphenyl phosphite are preferred.

Examples of the metal salt of a carboxylic acid include metal salts of carboxylic acids having 3 to 60 (preferably 3 to 30) carbon atoms.

Among these, one or more selected from metal salts of a fatty acid having 12 to 30 carbon atoms, and a dicarboxylic acid having 3 to 30 carbon atoms are preferred.

The metal to constitute the metal salt is preferably an alkali metal or an alkaline earth metal, more preferably an alkali metal.

Examples of the sulfur-containing extreme pressure agent include sulfurized oils and fats, sulfurized fatty acids, sulfurized esters, sulfurized olefins, dihydrocarbyl polysulfides, thiocarbamates, thioterpenes, dialkylthio dipropionates, etc.

The content of the extreme pressure agent is, from the viewpoint of lubrication performance and stability, preferably 0.001 to 5% by mass, more preferably 0.005 to 3% by mass, based on the total amount (100% by mass) of the refrigerator oil composition.

### <Antioxidant>

As the antioxidant, one or more selected from phenolic antioxidants and amine-based antioxidants are preferred.

Examples of the phenolic antioxidant include 2,6-di-tert-butyl-4-methylphenol, 2,6-di-tert-butyl-4-ethylphenol, 2,2'-methylenebis(4-methyl-6-tert-butylphenol), etc.

Examples of the amine-based antioxidant include phenyl-α-naphthylamine, N,N'-diphenyl-p-phenylenediamine, etc.

The content of the antioxidant is, from the viewpoint of stability and antioxidation performance, preferably 0.01 to 5% by mass, more preferably 0.05 to 3% by mass, based on the total amount (100% by mass) of the refrigerator oil composition.

### <Acid scavenger>

Examples of the acid scavenger include epoxy compounds such as phenyl glycidyl ether, alkyl glycidyl ether, alkylene glycol glycidyl ether, cyclohexene oxide, α-olefin oxide, epoxidized soybean oil, etc.

Among these, from the viewpoint of compatibility with base oil, one or more selected from phenyl glycidyl ether, alkyl glycidyl ether, alkyleneoxide glycidyl ether, cyclohexene oxide and α-olefin oxide are preferred.

The carbon number of the alkyl group in the alkyl glycidyl ether and that of the alkylene group in the alkylene glycol glycidyl ether each are preferably 3 to 30, more preferably 4 to 24, even more preferably 6 to 16. The alkyl group and the alkylene group may be linear or branched.

The carbon number of the α-olefin oxide is preferably 4 to 50, more preferably 4 to 24, even more preferably 6 to 16.

The content of the acid scavenger is, from the viewpoint of stability improvement, acid scavenging performance and sludge formation prevention, preferably 0.005 to 5% by mass, more preferably 0.05 to 3% by mass, based on the total amount (100% by mass) of the refrigerator oil composition.

### <Oxygen scavenger>

Examples of the oxygen scavenger include aliphatic unsaturated compounds, double bond-having terpenes, etc.

The aliphatic unsaturated compounds are preferably unsaturated hydrocarbons, specifically including olefins and polyenes such as dienes, trienes, etc. The olefins are, from the viewpoint of high reactivity with oxygen, preferably α-olefins such as 1-tetradecene, 1-hexadecene, 1-octadecene, etc.

As other aliphatic unsaturated compounds than the above, conjugated double bond-having unsaturated aliphatic alcohols such as vitamin A represented by a molecular formula C₂₀H₃₀O ((2E,4E,6E,8E)-3,7-dimethyl-9-(2,6,6-trimethylcyclohexen-1-yl)nona-2,4,6,8-tetraen-1-ol) and the like are preferred from the viewpoint of high reactivity with oxygen.

As the double bond-having terpenes, double bond-having terpene-type hydrocarbons are preferred, and from the viewpoint of high reactivity with oxygen, α-farnesene (C₁₅H₂₄: 3,7,11-trimethyldodeca-1,3,6,10-tetraene) and β- farnesene ((C₁₅H₂₄: 7,11-dimethyl-3-mehtylidenedodeca-1,6,10-triene) are more preferred.

### <Metal deactivator>

Examples of the metal deactivator include N-[N,N'-dialkyl (where the alkyl has 3 to 12 carbon atoms)aminomethyl]triazole, etc.

### <Rust inhibitor>

Examples of the rust inhibitor include metal sulfonates, aliphatic amines, organic phosphites, organic phosphates, organic sulfonic acid metal salts, organic phosphoric acid metal salts, alkenylsuccinates, polyalcohol esters, etc.

### <Oily agent>

Examples of the oily agent include aliphatic saturated or unsaturated monocarboxylic acids such as stearic acid, oleic acid, etc.; polymerized fatty acids such as dimer acids, hydrogenated dimer acids, etc.; hydroxylfatty acids such as ricinolic acid, 12-hydroxystearic acid, etc.; aliphatic saturated or unsaturated monoalcohols such as lauryl alcohol, oleyl alcohol, etc.; aliphatic saturated or unsaturated monoamines such as stearylamine, oleylamine, etc.; aliphatic saturated or unsaturated monocarboxylic acid amides such as lauramide, oleamide, etc.; partial esters of a polyalcohol such as glycerin, sorbitol or the like and an aliphatic saturated or unsaturated monocarboxylic acid, etc.

### <Antifoaming agent>

Examples of the antifoaming agent include silicone-based antifoaming agents such as silicone oil, fluorosilicone oil, etc.

### [Properties of refrigerator oil composition]

The refrigerator composition comprised in the composition of the present invention is excellent in compatibility with a refrigerant containing an unsaturated fluorinated compound having 2 carbon atoms and having a specific atom, and is also excellent in thermal stability.

The two-layer separation temperature on a low-temperature side from 1,1,2-trifluoroethlene (R1123) of one embodiment of the composition of the present invention is preferably -10°C or lower, more preferably -20°C or lower, even more preferably -30°C or lower, still more preferably -40°C or lower, especially preferably -50°C or lower.

The two-layer separation temperature on a high-temperature side from 1,1,2-trifluoroethlene (R1123) of one embodiment of the composition of the present invention is preferably 30°C or higher, more preferably 40°C or higher, even more preferably 45°C or higher, still more preferably 50°C or higher.

In this description, the two-layer separation temperature on a low-temperature side or a high-temperature side means a value measured according to the method described in the section of Examples.

Regarding one embodiment of the composition of the present invention, the acid value of the refrigerator oil composition after the "water-mixed sealed-tube test" described in the section of Examples is preferably 0.1 mgKOH/g or less, more preferably 0.05 mgKOH/g or less, even more preferably 0.02 mgKOH/g or less, still more preferably less than 0.01 mgKOH/g.

### [Composition for refrigeration device]

Preferably, mixed with a refrigerant containing an unsaturated fluorinated compound (I) having a carbon-carbon unsaturated bond, which is represented by the above-mentioned general formula (I), the refrigerator oil composition is charged in a refrigeration device as a composition for the refrigeration device.

In the composition for refrigeration devices, the content ratio of the refrigerator oil composition to the above-mentioned refrigerant [refrigerator oil composition/refrigerant] is, by mass, preferably1/99 to 90/10, more preferably 5/95 to 70/30.

In this description, "refrigerator oil composition" indicates one containing the base oil (P) and the above-mentioned optional additive as neccessary, and "composition for refrigeration devices" indicates one prepared by blending the refrigerator oil composition and a refrigerant.

The content of the unsaturated fluorinated compound (I) in the refrigerant contained in the composition for refrigeration devices is, from the viewpoint that the refrigerant could have a low global warming potential (GWP), preferably 20 to 100% by mass, more preferably 30 to 100% by mass, even more preferably 40 to 100% by mass, still more preferably 50 to 100% by mass, based on the total amount (100% by mass) of the refrigerant.

Preferably, the unsaturated fluorinated compound (I) is the main component of the refrigerant to be used in the present invention, and is a refrigerant component that has the largest content.

The unsaturated fluorinated compound (I) to be contained in the composition for refrigeration devices is preferably 1,1,2-trifluoroethylene (R1123) (hereinafter this may also be referred to as "R1123 refrigerant").

The content of the R1123 refrigerant is, based on the total amount (100% by mass) of the unsaturated fluorinated compound (I) contained in the composition for refrigeration devices as a refrigerant therein, preferably 70 to 100% by mass, more preferably 80 to 100% by mass, even more preferably 90 to 100% by mass, still more preferably 100% by mass.

The content of the R1123 refrigerant in the refrigerant to be contained in the composition for refrigeration devices is, based on the total amount (100% by mass) of the refrigerant, preferably 20 to 100% by mass, more preferably 30 to 100% by mass, even more preferably 40 to 100% by mass, still more preferably 50 to 100% by mass, further more preferably 75 to 100% by mass, especially preferably 100% by mass.

In other words, as the refrigerant to be contained in the composition for refrigeration devices, use of 1,1,2-trifluoroethylene (R1123) alone is especially preferred.

The refrigerant to be contained in the composition for refrigeration devices may be, if desired, a mixed refrigerant containing any other refrigerant than the unsaturated fluorinated compound (I).

Examples of the other refrigerant than the unsaturated fluorinated compound (I) contained in the mixed refrigerant include hydrofluorocarbons (HFC), hydrochlorofluoro-olefins (HCFO), chlorofluoro-olefins (CFO), hydrocarbons, CO₂, etc.

In one embodiment of the present invention, from the viewpoint of using a refrigerant capable of realizing refrigeration cycle performance and from the viewpoint of environmental aspects, it is desirable to use a refrigerant containing a hydrofluorocarbon (HFC) along with the unsaturated fluorinated compound (I).

### (Hydrofluorocarbon (HFC))

The refrigerant for use in one embodiment of the present invention may contain a hydrofluorocarbon (HFC).

HFC is a refrigerant component for improving the cycle performance of thermal cycle systems.

The carbon number of HFC is preferably 1 to 5, more preferably 1 to 3, even more preferably 1 to 2, further more preferably 1. HFC may be linear or branched.

Examples of HFC include difluoromethane, difluoroethane, trifluoroethane, tetrafluoroethane, pentafluoroethane, pentafluoropropane, hexafluoropropane, heptafluoropropane, pentafluorobutane, heptafluorocyclopentane, etc.

Among these, from the viewpoint of the ability to reduce influences on the ozone layer and to reduce influences on global warming, and from the viewpoint of providing a refrigerant capable of realizing refrigeration cycle performance, one or more selected from difluoromethane (HFC-32), 1,1-difluoroethane (HFC-152a), 1,1,2,2-tetrafluoroethane (HFC-134), 1,1,1,2-tetrafluoroethane (HFC-134a) and pentafluoroethane(HFC-125) are preferred, and one or more selected from difluoromethane (HFC-32), 1,1,2,2-tetrafluoroethane (HFC-134) and 1,1,1,2-tetrafluoroethane (HFC-134a) are more preferred.

One alone or two or more of these HFCs may be used either singly or as combined.

In particular, as a refrigerant to be contained in the composition for refrigeration devices, a mixed refrigerant (1) of R1123 refrigerant and difluoromethane (HFC-32) (hereinafter this may also be referred to as "HFC-32 refrigerant"), or a mixed refrigerant (2) of R1123 refrigerant and 1,1,1,2-tetrafluoroethane (HFC-134a) (hereinafter this may also be referred to as "HFC-134a refrigerant") is preferred.

The content of HFC in the refrigerant to be contained in the composition for refrigeration devices is, from the viewpoint of the ability to reduce influences on the ozone layer and to reduce influences on global warming, and from the viewpoint of providing a refrigerant capable of realizing refrigeration cycle performance, preferably 0 to 80% by mass, more preferably 5 to 70% by mass, even more preferably 10 to 60% by mass, still more preferably 15 to 50% by mass, based on the total amount (100% by mass) of the refrigerant.

In the case where the refrigerant contained in the composition for refrigeration devices is a mixed refrigerant (1) of R1123 refrigerant and HFC-32 refrigerant, the content ratio of R1123 refrigerant to HFC-32 refrigerant [R1123 refrigerant/HFC-32 refrigerant] is, by mass, preferably 1/4 to 4/1, more preferably 1/3 to 3/1, even more preferably 1/2 to 2/1, still more preferably 1/1.5 to 1.5/1, especially preferably 1/1.2 to 1.2/1.

In the case where the mixed refrigerant (1) is used as the refrigerant to be contained in the composition for refrigeration devices, the content of the mixed refrigerant (1) is, based on the total amount (100% by mass) of the refrigerant in the composition for refrigeration devices, preferably 80 to 100% by mass, more preferably 90 to 100% by mass, even more preferably 100% by mass.

In the case where the refrigerant contained in the composition for refrigeration devices is a mixed refrigerant (2) of R1123 refrigerant and HFC-134a refrigerant, the content ratio of R1123 refrigerant to HFC-134a refrigerant [R1123 refrigerant/HFC-134a refrigerant] is, by mass, preferably 1/4 to 4/1, more preferably 1/3 to 3/1, even more preferably 1/2 to 2/1, still more preferably 1/1.5 to 1.5/1, especially preferably 1/1.2 to 1.2/1.

In the case where the mixed refrigerant (2) is used as the refrigerant to be contained in the composition for refrigeration devices, the content of the mixed refrigerant (2) is, based on the total amount (100% by mass) of the refrigerant in the composition for refrigeration devices, preferably 80 to 100% by mass, more preferably 90 to 100% by mass, even more preferably 100% by mass.

### (Hydrochlorofluoro-olefin (HCFO), chlorofluoro-olefin (CFO))

The refrigerant for use in one embodiment of the present invention may contain at least one of hydrochlorofluoro-olefin (HCFO) and chlorofluoro-olefin (CFO).

HCFO and CFO are refrigerant components capable of suppressing flammability and capable of improving solubility in base oil.

The carbon number of HCFO and CFO is preferably 1 to 6, more preferably 2 to 5, even more preferably 2 to 3. HCFO and CFO may be linear or branched.

From the viewpoint of having few influences on the ozone layer and having few influences on global warming, HCFO is preferred.

Examples of HCFO include hydrochlorofluoropropene, hydrochlorofluoroethylene, etc.

Among these, from the viewpoint of preventing refrigeration cycle performance from degrading and of sufficiently preventing flammability of refrigerant, one or more selected from 1-chloro-2,3,3,3-tetrafluoroprpene (HCFO-1224yd) and 1-chloro-1,2-difluoroethlene (HCFO-1122) are preferred.

One alone or two or more of these HCFOs may be used either singly or as combined.

Examples of CFO include chlorofluoropropene, chlorofluoroethylene, etc.

Among these, from the viewpoint of preventing refrigeration cycle performance from degrading and of sufficiently preventing flammability of refrigerant, one or more selected from 1,1-dichloro-2,3,3,3-tetrafluoropropene (CFO-1214ya) and 1,2-dichloro-1,2-difluoroethylene (CFP-1112) are preferred.

One alone or two or more of these CFOs may be used either singly or as combined.

The total content of HCFO and CFO in the refrigerant to be contained in the composition for refrigeration devices is, based on the total amount (100% by mass) of the refrigerant, preferably 0 to 60% by mass, more preferably 0 to 50% by mass, even more preferably 0 to 40% by mass, still more preferably 0 to 30% by mass.

### (Hydrocarbon)

The refrigerant for use in one embodiment of the present invention may contain hydrocarbon.

Examples of the hydrocarbon usable as the refrigerant include propane, propylene, cyclopropane, butane, isobutene, pentane, isopentane, etc., and hydrocarbons having 3 to 5 carbon atoms are preferred.

One alone or two or more of these hydrocarbons may be used either singly or as combined.

The content of the hydrocarbon in the refrigerant to be contained in the composition for refrigeration devices is, based on the total amount (100% by mass) of the refrigerant, preferably 0 to 30% by mass, more preferably 0 to 10% by mass.

### (CO₂)

The refrigerant for use in one embodiment of the present invention may contain CO₂.

The content of CO₂ in the refrigerant to be contained in the composition for refrigeration devices is, based on the total amount (100% by mass) of the refrigerant, preferably 0 to 20% by mass, more preferably 0 to 10% by mass, even more preferably 0 to 5% by mass.

The global warming potential (GWP) of the refrigerant for use in one embodiment of the present invention is preferably 1300 or less, more preferably 500 or less, even more preferably 200 or less.

### [Refrigeration device]

The composition of the present invention can be used in a refrigeration device.

In a lubrication method for the refrigeration device, the use amount ratio of the refrigerator oil composition to the refrigerant [refrigerator oil composition/refrigerant] is, by mass, preferably 1/99 to 90/10, more preferably 5/95 to 70/30.

The refrigeration device may be loaded with the refrigerator oil composition and the above-mentioned composition for refrigeration devices that contains an unsaturated fluorinated compound (I) and a refrigerant.

The composition for refrigeration devices is usable in various kinds of refrigeration devices, and is especially favorably applied to a compression-type refrigeration cycle of a compression-type refrigeration device.

More specifically, as the refrigeration device using the composition of the present invention, for example, there are mentioned an air conditioner, a gas heat pump (GHP), a refrigerator, a vending machine, a show case, a water heater, a floor heating system, etc.

### EXAMPLES

The present invention will be next described more concretely by way of examples but is not restricted to these examples in any way.

The properties of the base oil used in Examples, Reference Examples and Comparative Examples were determined according to the methods mentioned below.

### <Properties of base oil>

### (1) Kinematic viscosity (40°C, 100°C)

Measured according to JIS K2283:1983, using a glass capillary viscometer.

### (2) Acid value

Measured through indicator photometric titration according to JIS K2501:2003 (see Annex 1 in the forgoing JIS provision).

### (3) Hydroxyl value

Measured through neutralization titration according to JIS K0070:1992.

### (4) Water content

Measured through Karl-Fischer moisture titration according to JIS K2275:1996.

### (5) Volume resistivity

Measured according to JIS C 2101:2010.

### (6) Surface tension

Measured according to JIS K 2241:2000.

Types of components used in preparing the refrigerator oil compositions of Examples and Comparative Examples are shown below.

### (1) Base oil

Any of PVE (polyvinyl ethers), PAG (polyalkylene glycols), ECP (copolymers of poly(oxy)alkylene glycol or monoether thereof and polyvinyl ether) and POE (polyol esters) was used as the base oil.

The physical properties of the base oil shown in Table 1 are values measured according to the above-mentioned methods.

**Table 1**

| Base Oil | | | 40°C Kinematic Viscosity (mm²/s) | 100°C Kinematic Viscosity (mm²/s) | Acid Value (mg KOH/g) | Hydroxyl Value (mg KOH/g) | Water Content (ppm) | Volume Resistivity (TΩ·m) | Surface Tension (N/m) |
|---|---|---|---|---|---|---|---|---|---|
| PVE | PVE-1 | Polyethyl vinyl ether (both terminals: CH₃-CH(OCH₂CH₃)-) | 66.9 | 8.26 | 0.01 | 2.8 | 50 | 0.20 | 0.027 |
| | PVE-2 | Polyethyl vinyl ether (both terminals: CH₃-CH(OCH₂CH₃)-) | 325.4 | 23.26 | 0.01 | 4.2 | 500 | 2.70 | 0.031 |
| | PVE-3 | Polyethyl vinyl ether/polyisobutyl vinyl ether copolymer (ratio by mass: 9/1) (both terminals: CH₃-CH(OCH₂CH₃)- or CH₃-CH(OC(CH₃)₃)-) | 64.3 | 7.91 | 0.01 | 1.1 | 100 | 1.10 | 0.027 |
| | PVE-4 | Polyethyl vinyl ether/polymethyl vinyl ether copolymer (ratio by mass: 5/5) (both terminals: CH₃-CH(OCH₂CH₃)- or CH₃-CH(OCH₃)-) | 33.3 | 5.30 | 0.01 | 3.0 | 50 | 0.33 | 0.027 |
| | PVE-5 | Polyethyl vinyl ether (both terminals: CH₃-CH(OCH₂CH₃)-) | 1180.0 | 53.50 | 0.02 | 2.9 | 150 | 5.20 | 0.033 |
| | PVE-6 | Polyethyl vinyl ether (both terminals: CH₃-CH(OCH₂CH₃)-) | 69.8 | 8.52 | 0.02 | 6.7 | 450 | 0.11 | 0.027 |
| | PVE-7 | Polyethyl vinyl ether/polyisobutyl vinyl ether copolymer (ratio by mass: 9/1) (both terminals: CH₃-CH(OCH₂CH₃)- or CH₃-CH(OC(CH₃)₃)-) | 256.2 | 19.80 | 0.02 | 7.1 | 2600 | 0.57 | 0.027 |
| | PVE-8 | Polyethyl vinyl ether/polymethyl vinyl ether copolymer (ratio by mass: 8/2) (both terminals: CH₃-CH(OCH₂CH₃)- or CH₃-CH(OCH₃)-) | 80.8 | 9.35 | 0.01 | 9.0 | 200 | 0.15 | 0.027 |
| PAG | PAG-1 | Polyoxypropylene glycol (both terminals: methyl group) | 42.8 | 9.52 | 0.01 | 0.9 | 330 | 0.001 | 0.031 |
| | PAG-2 | Polyoxypropylene glycol (both terminals: methyl group) | 376.8 | 54.20 | 0.02 | 3.9 | 300 | 0.001 | 0.035 |
| ECP | ECP-1 | Polypropylene glycol/polyethyl vinyl ether copolymer (ratio by mass: 5/5) | 170.3 | 20.60 | 0.01 | 3.6 | 450 | 0.02 | 0.030 |
| | ECP-2 | Polypropylene glycol/polyethyl vinyl ether copolymer (ratio by mass: 5/5) | 57.2 | 9.17 | 0.01 | 7.0 | 180 | 0.01 | 0.029 |
| POE | POE-1 | Ester of pentaerythritol with caprylic acid and pelargonic acid (caprylic acid/pelargonic acid = 1/1.1 by mol) | 68.5 | 8.31 | 0.01 | 1.6 | 60 | 1.50 | 0.029 |
| | POE-2 | Ester of pentaerythritol with isobutyric acid and 3,5,5-trimethylhexanoic acid (isobutyric acid/3,5,5-trimethylhexanoic acid = 4/8 by mol) | 64.9 | 7.98 | 0.02 | 2.0 | 180 | 1.20 | 0.029 |
| | POE-3 | Ester of pentaerythritol with caprylic acid and pelargonic acid (caprylic acid/pelargonic acid = 1/1.1 by mol) | 82.6 | 9.56 | 0.01 | 8.5 | 320 | 1.10 | 0.029 |

### (2) Additives

A mixture of the following components was used.
Extreme pressure agent: tricresyl phosphate
Acid scavenger: 2-ethylhexyl glycidyl ether
Antioxidant: 2,6-di-t-butyl-4-methylphenol
Antifoaming agent: silicone-based antifoaming agent

### (3) Refrigerant

"Refrigerant 1": 1,1,2-trifluoroethlene (R1123)
"Refrigerant 2": mixed refrigerant of 1,1,2-trifluoroethylene (R1123) and difluoromethane (R32) (R1123/R32 = 50/50 by mass)
"Refrigerant 3": mixed refrigerant of 1,1,2-trifluoroethylene (R1123) and 1,1,1,2-tetrafluoroethane (R134a) (R1123/R134a = 50/50 by mass)

### <Examples 1, 3 to 5, 7 to 9, 11, 12, and 14 to 16, Reference Examples 2, 6, 10 and 13, and Comparative Examples 1 to 14>

A refrigerator oil composition having the composition shown in Table 2 and Table 3 was prepared, mixed with the refrigerant shown in the table, and the resulting composition for refrigeration devices was tested and evaluated in point of the thermal stability and the two-layer separation temperature thereof according to the methods mentioned below. The results are shown in Table 2 and Table 3.

### (1) Thermal stability (water-mixed sealed-tube test)

According to a water-mixed sealed-tube test, the thermal stability of the composition for refrigeration devices was evaluated.

Specifically, 30 g of the composition for refrigeration devices prepared in Examples, Reference Examples and Comparative Examples, 30 g of the refrigerant shown in Table 2 and Table 3, and water (in such an amount to provide a water content of 500 ppm) were put in a glass tube, then metal catalysts of iron (Fe), copper (Cu) and aluminum (Al) were added thereto, and the tube was sealed up, then kept in an environment under a pressure of 0.7 kPa and at a temperature of 175°C for 14 days.

After thus stored, the "acid value of the composition for refrigeration devices" was measured, and the glass tube was visually observed and evaluated in point of "appearance of oil", "presence or absence of precipitate" and "appearance of catalyst".

### (2) Two-layer separation temperature

0.3 g of the composition for refrigeration devices prepared in Examples, Reference Examples and Comparative Examples, and 2.7 g of the refrigerant shown in Table 2 and Table 3 were put in a two-layer separation temperature-measuring tube (inner volume 10 mL), and kept in a thermostatic chamber. The thermostatic chamber was heated from room temperature (25°C) up to 50°C at a rate of 1.0°C/min, and the temperature at which the sample underwent two-layer separation was confirmed was measured. In Table 2 and Table 3, "separated" means that the sample had already undergone two-layer separation at room temperature (25°C), and "50<" means that the sample did not undergo two-layer separation even though heated up to 50°C (that is, the two-layer separation temperature on the high-temperature side of the sample is higher than 50°C).

Furthermore, the thermostatic chamber was cooled from room temperature (25°C) down to -50°C at a rate of 1.0°C/min, and the temperature at which the sample underwent two-layer separation was confirmed was measured. In Table 2 and Table 3, "separated" means that the sample had already undergone two-layer separation at room temperature (25°C), and "-50>" means that the sample did not undergo two-layer separation even though cooled down to -50°C (that is, the two-layer separation temperature on the low-temperature side of the sample is lower than -50°C).

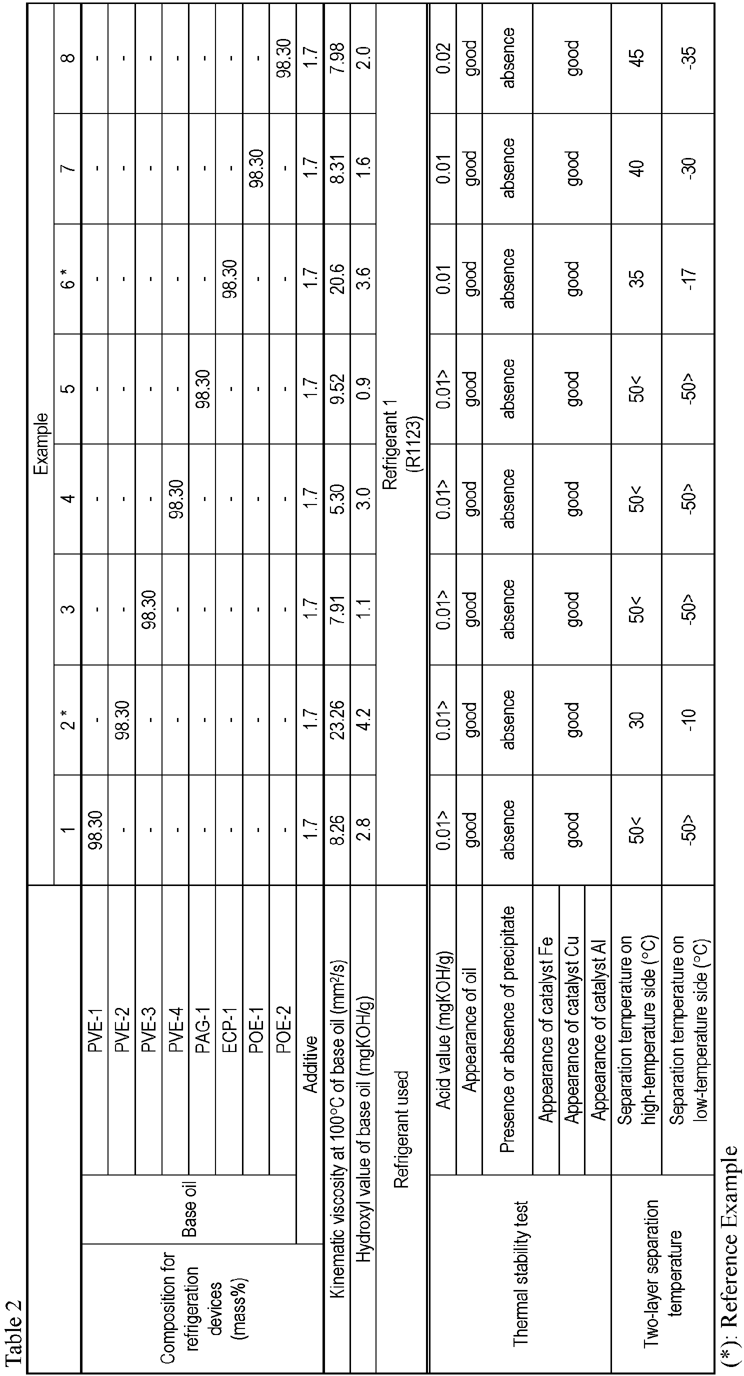

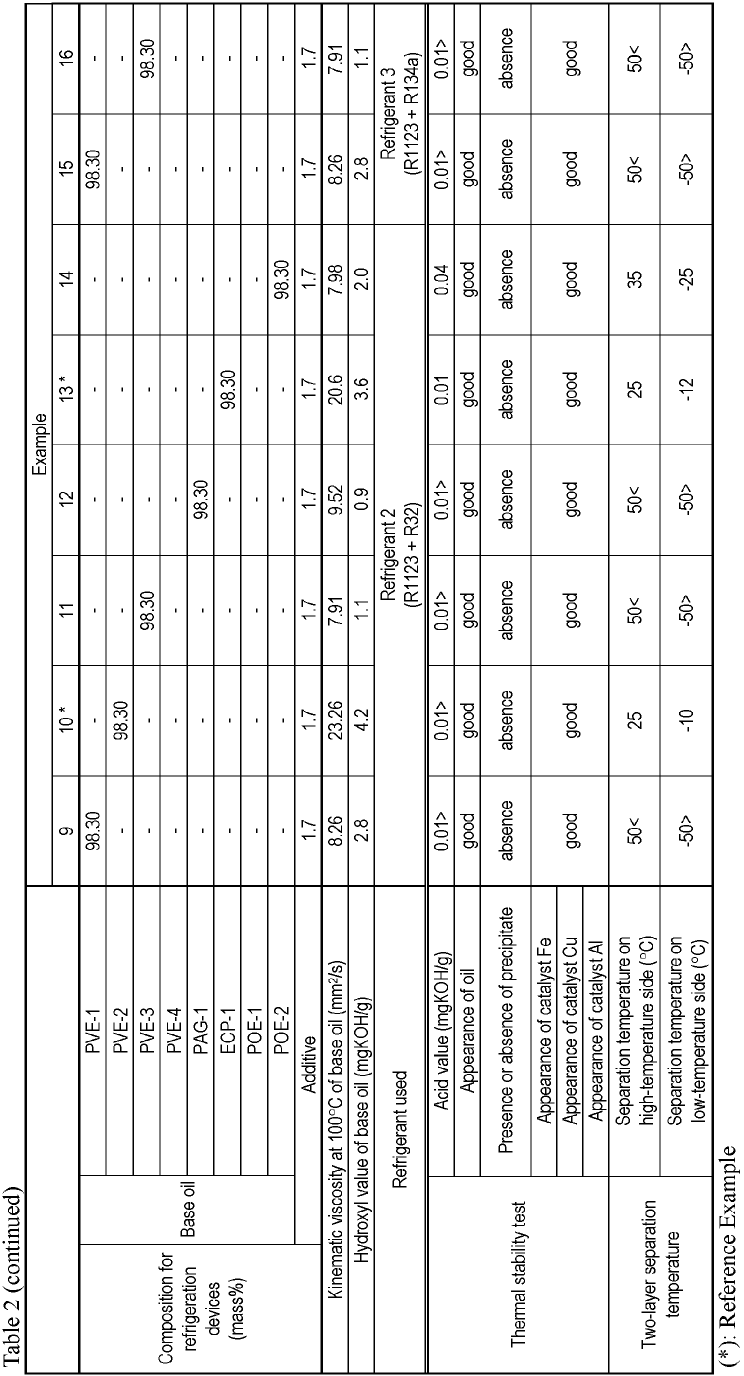

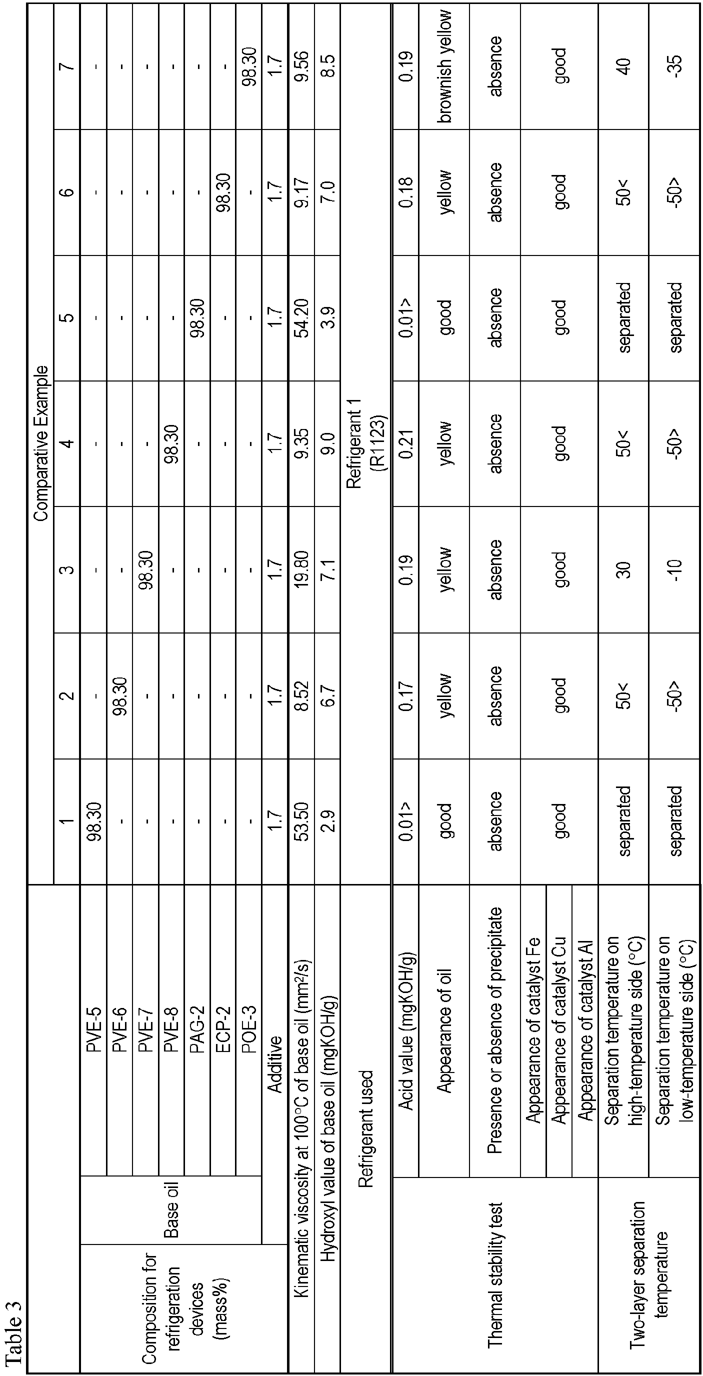

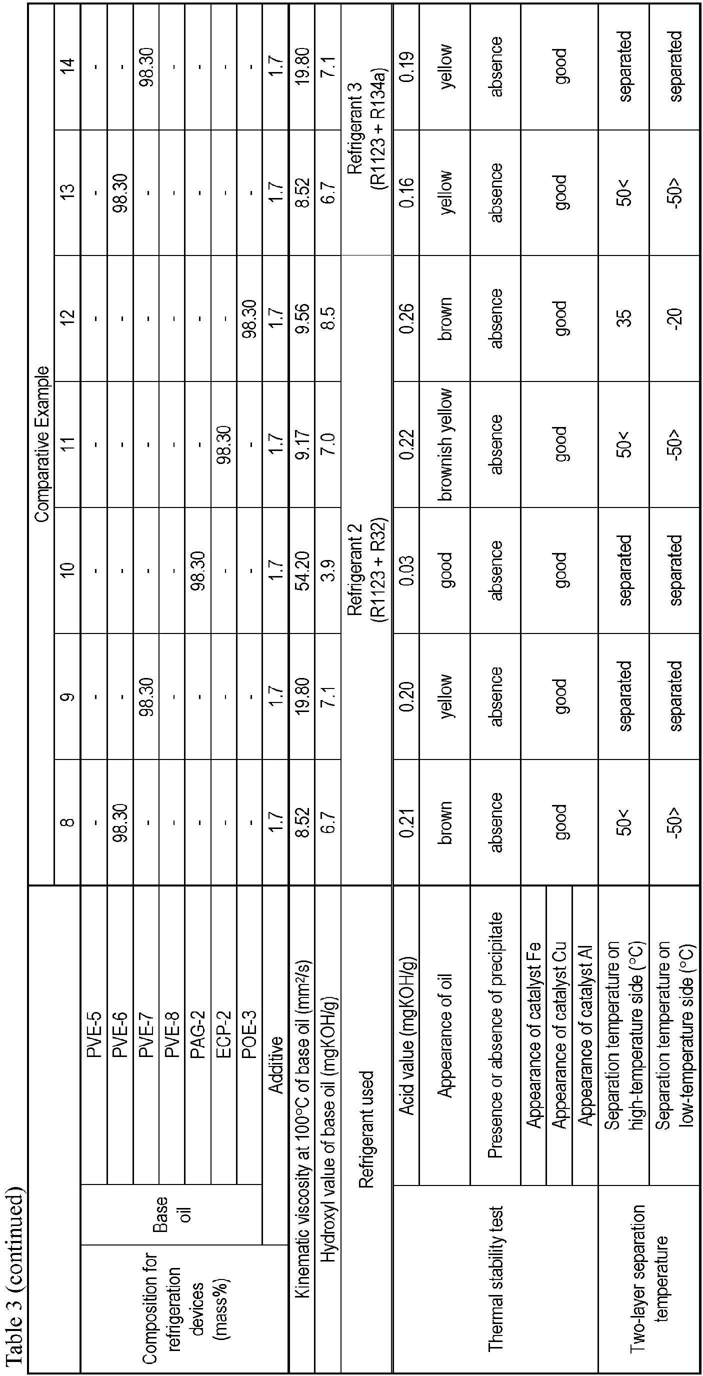

From Table 2 and Table 3, it is known that the refrigerator oil compositions of Examples 1 to 16, as one embodiment of the present invention, exhibit, when used along with a refrigerant containing the unsaturated fluorinated compound (I) such as R1123 or the like, excellent compatibility with the refrigerant and have excellent stability, as compared with the refrigerator oil compositions of Comparative Examples 1 to 14

### Industrial Applicability

The composition of the present invention is favorably used in a refrigeration device using a refrigerant containing an unsaturated fluorinated compound (I) such as R1123, etc.

## Claims

1. A composition comprising
(i) a refrigerant comprising an unsaturated fluorinated compound having a carbon-carbon unsaturated bond, which is represented by the following general formula (I):
C₂FₚR₄₋ₚ (I)
wherein R represents a hydrogen atom, and p represents an integer of 1 to 3; and
(ii) a refrigerator oil composition comprising a base oil (P) which consists of a polyvinyl ether, a polyalkylene glycol, a copolymer of a poly(oxy)alkylene glycol or a monoether thereof and a polyvinyl ether, or a polyol ester;
the base oil (P) having a kinematic viscosity at 100°C of 2.00 to 15.00 mm²/s measured according to JIS K 2283:1983 using a glass capillary viscometer and a hydroxyl value of 5.0 mgKOH/g or less, measured through neutralization titration according to JIS K 0070:1992.

2. The composition according to claim 1, wherein the polyvinyl ether is a copolymer (A1) having one or more of a structural unit represented by the following general formula (A-1): 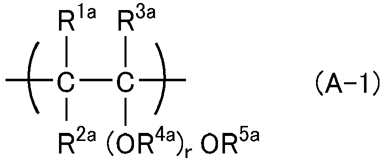 wherein R^{1a}, R^{2a} and R^{3a} each independently represents a hydrogen atom, or a hydrocarbon group having 1 to 8 carbon atoms, R^{4a} represents a divalent hydrocarbon group having 2 to 10 carbon atoms, represents a hydrocarbon group having 1 to 10 carbon atoms, and r represents a number of 0 to 10.

3. The composition according to claim 1 or 2, wherein the polyvinyl ether is a polymer which has an alkyl group having 1 to 4 carbon atoms in a side chain thereof.

4. The composition according to claim 1, wherein the polyoxyalkylene glycol is a compounds (B1) represented by the following general formula (B-1):
R^{1b}-[(OR^{2b})ₘ-OR^{3b}]ₙ (B-1)
wherein R^{1b} represents a hydrogen atom, a monovalent hydrocarbon group having 1 to 10 carbon atoms, an acyl group having 2 to 10 carbon atoms, a di- to hexavalent hydrocarbon group having 1 to 10 carbon atoms, or a substituted or unsubstituted heterocyclic group having ring atoms of 3 to 10, R^{2b} represents an alkylene group having 2 to 4 carbon atoms, R^{3b} represents a hydrogen atom, a monovalent hydrocarbon group having 1 to 10 carbon atoms, an acyl group having 2 to 10 carbon atoms, or a substituted or unsubstituted heterocyclic group having ring atoms of 3 to 10, n represents an integer of 1 to 6, and m represents a number of 1 or more.

5. The composition according to claim 1, wherein the copolymer of a poly(oxy)alkylene glycol or a monoether thereof and a polyvinyl ether is a copolymer (C1) represented by the following general formula (C-1) or a copolymer (C2) represented by the following general formula (C-2): 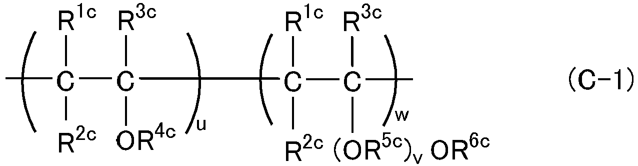 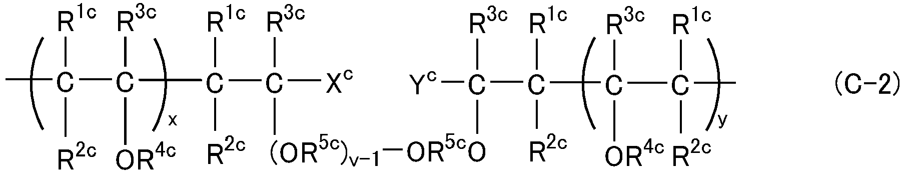
wherein R^{1c}, R^{2c} and R^{3c} each independently represents a hydrogen atom or a hydrocarbon group having 1 to 8 carbon atoms, R^{4c} each independently represents a hydrocarbon group having 1 to 10 carbon atoms, R^{5c} each independently represents an alkylene group having 2 to 4 carbon atoms, R^{6c} each independently represents an alkyl group having 1 to 20 carbon atoms, a substituted or unsubstituted alicyclic group having ring carbon atoms of 3 to 20, a substituted or unsubstituted aromatic group having ring carbon atoms of 6 to 24, an acyl group having 2 to 20 carbon atoms, or an oxygen-containing hydrocarbon group having 2 to 50 carbon atoms, in the case where the formulae have plural R^{1c}, R^{2c}, R^{3c}, R^{4c}, R^{5c} and R^{6c}, these may be the same or different in each structural unit,
X^{C} and Y^{C} each independently represents a hydrogen atom, a hydroxyl group, or a hydrocarbon group having 1 to 20 carbon atoms,
v represents a number of 1 or more, u represents a number of 0 or more, w represents a number of 1 or more, and x and y each independently represents a number of 1 or more.

6. The composition according to claim 1, wherein the polyol ester is an ester of a diol or a polyol having 3 to 20 hydroxyl groups with a fatty acid having 3 to 20 carbon atoms.

7. The composition according to any one of claims 1 to 6, wherein the volume resistivity of the base oil (P) is 0.01 TΩ·m or more, measured according to JIS C 2101:2010.

8. The composition according to any one of claims 1 to 7, wherein the surface tension of the base oil (P) is 0.02 to 0.04 N/m, measured according to JIS K 2241:2000.

9. The composition according to any one of claims 1 to 8, comprising one or more additives selected from the group consisting of an extreme pressure agent, an antioxidant, an acid scavenger, an oxygen scavenger, a metal deactivator, a rust inhibitor, an oily agent and an antifoaming agent.

10. The composition according to any one of claims 1 to 9, which is a refrigerator oil composition for a refrigerant containing a hydrofluorocarbon, along with the unsaturated fluorinated compound having a carbon-carbon unsaturated bond, which is represented by the general formula (I).

11. Use of the composition as defined in any one of the claims 1 to 10, for an air conditioner, a gas heat pump, a refrigerator, a vending machine, a show case, a water heater or a floor heating system.

## Patentansprüche

1. Zusammensetzung umfassend:
(i) ein Kühlmittel, das eine ungesättigte fluorierte Verbindung mit einer ungesättigten Kohlenstoff-Kohlenstoff-Bindung umfasst, dargestellt durch folgende allgemeine Formel (I):
C₂FₚR₄₋ₚ (I)
wobei R ein Wasserstoffatom darstellt und p eine ganze Zahl von 1 bis 3 darstellt; und
(ii) eine Kältemaschinenölzusammensetzung umfassend ein Grundöl (P), das aus einem Polyvinylether, einem Polyalkylenglykol, einem Copolymer aus einem Poly(oxy)alkylenglykol oder einem Monoether davon und einem Polyvinylether, oder einem Polyolester besteht; wobei das Grundöl (P) eine kinematische Viskosität bei 100°C von 2,00 bis 15,00 mm²/s, gemessen gemäß JIS K 2283:1983 unter Verwendung eines Glaskapillarviskosimeters, und einen Hydroxylwert von 5,0 mgKOH/g oder weniger, gemessen durch Neutralisationstitration gemäß JIS K 0070:1992, aufweist.

2. Zusammensetzung gemäß Anspruch 1, wobei der Polyvinylether ein Copolymer (A1) mit einer oder mehreren Struktureinheiten der folgenden allgemeinen Formel (A-1) ist: 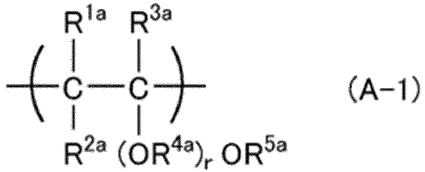 wobei R^{1a}, R^{2a} und R^{3a} jeweils unabhängig voneinander ein Wasserstoffatom, oder eine Kohlenwasserstoffgruppe mit 1 bis 8 Kohlenstoffatomen darstellen, R^{4a} eine bivalente Kohlenwasserstoffgruppe mit 2 bis 10 Kohlenstoffatomen darstellt, eine Kohlenwasserstoffgruppe mit 1 bis 10 Kohlenstoffatomen darstellt und r eine Zahl von 0 bis 10 darstellt.

3. Zusammensetzung gemäß Anspruch 1 oder 2, wobei der Polyvinylether ein Polymer ist, das eine Alkylgruppe mit 1 bis 4 Kohlenstoffatomen in einer Seitenkette davon aufweist.

4. Zusammensetzung gemäß Anspruch 1, wobei das Polyoxyalkylenglykol eine Verbindung (B1) der folgenden allgemeinen Formel (B-1) ist:
R^{1b}-[(OR^{2b})ₘ-OR^{3b}]ₙ (B-1)
wobei R^{1b} ein Wasserstoffatom, eine monovalente Kohlenwasserstoffgruppe mit 1 bis 10 Kohlenstoffatomen, eine Acylgruppe mit 2 bis 10 Kohlenstoffatomen, eine bibis hexavalente Kohlenwasserstoffgruppe mit 1 bis 10 Kohlenstoffatomen, oder eine substituierte oder unsubstituierte heterocyclische Gruppe mit Ringatomen von 3 bis 10 darstellt, R^{2b} eine Alkylengruppe mit 2 bis 4 Kohlenstoffatomen darstellt, R^{3b} ein Wasserstoffatom, eine monovalente Kohlenwasserstoffgruppe mit 1 bis 10 Kohlenstoffatomen, eine Acylgruppe mit 2 bis 10 Kohlenstoffatomen, oder eine substituierte oder unsubstituierte heterocyclische Gruppe mit Ringatomen von 3 bis 10 darstellt, n eine ganze Zahl von 1 bis 6 darstellt und m eine Zahl von 1 oder mehr darstellt.

5. Zusammensetzung gemäß Anspruch 1, wobei das Copolymer eines Poly(oxy)alkylenglykols oder eines Monoethers davon und eines Polyvinylethers ein Copolymer (C1), dargestellt durch die folgende allgemeine Formel (C-1), oder ein Copolymer (C2), dargestellt durch die folgende allgemeine Formel (C-2), ist: 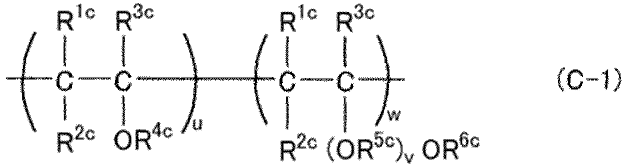 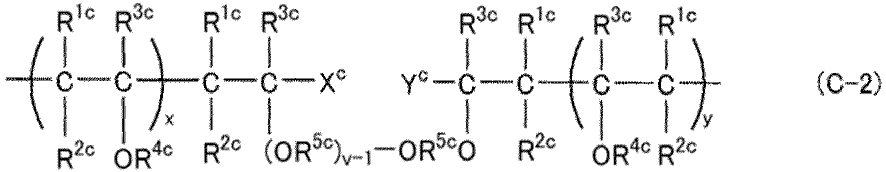
wobei R^{1c}, R^{2c} und R^{3c} jeweils unabhängig voneinander ein Wasserstoffatom oder eine Kohlenwasserstoffgruppe mit 1 bis 8 Kohlenstoffatomen darstellen, R^{4c} jeweils unabhängig voneinander eine Kohlenwasserstoffgruppe mit 1 bis 10 Kohlenstoffatomen darstellen, R^{5c} jeweils unabhängig voneinander eine Alkylengruppe mit 2 bis 4 Kohlenstoffatomen darstellen, R^{6c} jeweils unabhängig voneinander eine Alkylgruppe mit 1 bis 20 Kohlenstoffatomen, eine substituierte oder unsubstituierte alicyclische Gruppe mit Ringkohlenstoffatomen von 3 bis 20, eine substituierte oder unsubstituierte aromatische Gruppe mit Ringkohlenstoffatomen von 6 bis 24, eine Acylgruppe mit 2 bis 20 Kohlenstoffatomen oder eine sauerstoffhaltige Kohlenwasserstoffgruppe mit 2 bis 50 Kohlenstoffatomen darstellt, wenn die Formeln mehrere R^{1c}, R^{2c}, R^{3c}, R^{4c}, R^{5c} und R^{6c} aufweisen, diese in jeder Struktureinheit gleich oder verschieden sein können,
X^{C} und Y^{C} jeweils unabhängig voneinander ein Wasserstoffatom, eine Hydroxylgruppe oder eine Kohlenwasserstoffgruppe mit 1 bis 20 Kohlenstoffatomen darstellen,
v eine Zahl von 1 oder mehr darstellt, u eine Zahl von 0 oder mehr darstellt, w eine Zahl von 1 oder mehr darstellt, und x und y jeweils unabhängig voneinander eine Zahl von 1 oder mehr darstellen.

6. Zusammensetzung gemäß Anspruch 1, wobei der Polyolester ein Ester eines Diols oder eines Polyols mit 3 bis 20 Hydroxylgruppen mit einer Fettsäure mit 3 bis 20 Kohlenstoffatomen ist.

7. Zusammensetzung gemäß mindestens einem der Ansprüche 1 bis 6, wobei der Volumenwiderstand des Grundöls (P) 0,01 TΩ•m oder mehr beträgt, gemessen gemäß JIS C 2101:2010.

8. Zusammensetzung gemäß mindestens einem der Ansprüche 1 bis 7, wobei die Oberflächenspannung des Grundöls (P) 0,02 bis 0,04 N/m beträgt, gemessen gemäß JIS K 2241:2000.

9. Zusammensetzung gemäß mindestens einem der Ansprüche 1 bis 8, umfassend ein oder mehrere Additive, ausgewählt aus der Gruppe, bestehend aus einem Hochdruckmittel, einem Antioxidationsmittel, einem Säurefänger, einem Sauerstofffänger, einem Metalldesaktivator, einem Rostinhibitor, einem öligen Mittel und einem Antischaummittel.

10. Zusammensetzung gemäß mindestens einem der Ansprüche 1 bis 9, die eine Kältemaschinenölzusammensetzung für ein Kühlmittel ist, das einen Fluorkohlenwasserstoff zusammen mit der durch die allgemeine Formel (I) dargestellten ungesättigten fluorierten Verbindung mit einer ungesättigten Kohlenstoff-Kohlenstoff-Bindung enthält.

11. Verwendung der Zusammensetzung gemäß mindestens einem der Ansprüche 1 bis 10 für eine Klimaanlage, eine Gaswärmepumpe, einen Kühlschrank, einen Automaten, eine Vitrine, einen Wassererhitzer oder eine Fußbodenheizung.

## Revendications

1. Composition comprenant
(i) un réfrigérant comprenant un composé fluoré insaturé présentant une liaison insaturée carbone-carbone, qui est représenté par la formule générale (I) suivante :
C₂FₚR₄₋ₚ (I)
dans laquelle R représente un atome d'hydrogène, et p représente un nombre entier de 1 à 3 ; et
(ii) une composition d'huile pour réfrigérateur comprenant une huile de base (P) qui consiste en un polyvinyléther, un polyalkylèneglycol, un copolymère d'un poly(oxy)alkylèneglycol ou d'un monoéther de celui-ci et d'un polyvinyléther, et un ester de polyol ;
l'huile de base (P) présentant une viscosité cinématique à 100 °C de 2,00 à 15,00 mm2/s mesurée conformément au JIS K 2283:1983 en utilisant un viscosimètre à capillaire en verre et un indice d'hydroxyle de 5,0 mgKOH/g ou moins, mesuré par titrage de neutralisation conformément au JIS K 0070:1992.

2. Composition selon la revendication 1, dans laquelle le polyvinyléther est un copolymère (A1) présentant un ou plusieurs d'un motif de structure représenté par la formule générale (A-1) suivante : 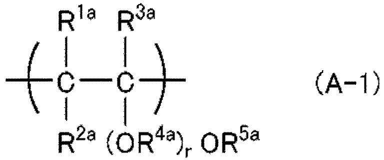 dans laquelle R₁ₐ, R₂ₐ et R₃ₐ représentent chacun indépendamment un atome d'hydrogène, ou un groupe hydrocarboné présentant 1 à 8 atomes de carbone, R₄ₐ représente un groupe hydrocarboné divalent présentant 2 à 10 atomes de carbone, R₅ₐ représente un groupe hydrocarboné présentant 1 à 10 atomes de carbone, et r représente un nombre de 0 à 10.

3. Composition selon la revendication 1 ou 2, dans laquelle le polyvinyléther est un polymère qui présente un groupe alkyle présentant 1 à 4 atomes de carbone dans une chaîne latérale de celui-ci.

4. Composition selon la revendication 1, dans laquelle le polyoxyalkylèneglycol est un composé (B1) représenté par la formule générale (B-1) suivante :
R^{1b}-[(OR^{2b})ₘ-OR^{3b}]ₙ (B-1)
dans laquelle R^{1b} représente un atome d'hydrogène, un groupe hydrocarboné monovalent présentant 1 à 10 atomes de carbone, un groupe acyle présentant 2 à 10 atomes de carbone, un groupe hydrocarboné di- à hexavalent présentant 1 à 10 atomes de carbone, ou un groupe hétérocyclique substitué ou non substitué présentant 3 à 10 atomes de cycle, R^{2b} représente un groupe alkylène présentant 2 à 4 atomes de carbone, R^{3b} représente un atome d'hydrogène, un groupe hydrocarboné monovalent présentant 1 à 10 atomes de carbone, un groupe acyle présentant 2 à 10 atomes de carbone, ou un groupe hétérocyclique substitué ou non substitué présentant 3 à 10 atomes de cycle, n représente un nombre entier de 1 à 6, et m représente un nombre égal à 1 ou plus.

5. Composition selon la revendication 1, dans laquelle le copolymère d'un poly(oxy)alkylèneglycol ou d'un monoéther de celui-ci et d'un polyvinyléther est un copolymère (C1) représenté par la formule générale (C-1) suivante ou un copolymère (C2) représenté par la formule générale (C-2) suivante : 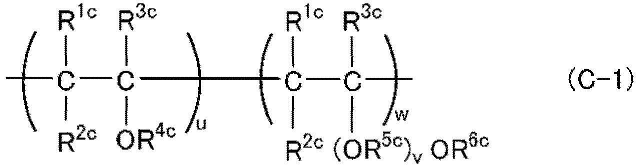 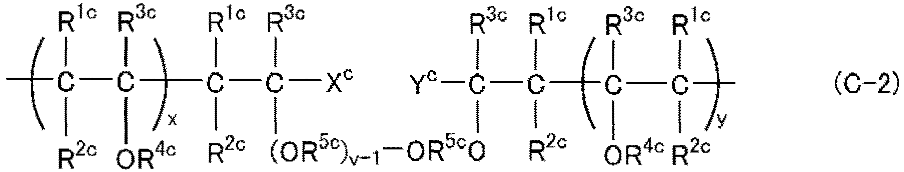
dans laquelle R^{1c}, R^{2c} et R^{3c} représentent chacun indépendamment un atome d'hydrogène ou un groupe hydrocarboné présentant 1 à 8 atomes de carbone, les R^{4c} représentent chacun indépendamment un groupe hydrocarboné présentant 1 à 10 atomes de carbone, les R^{5c} représentent chacun indépendamment un groupe alkylène présentant 2 à 4 atomes de carbone, les R^{6c} représentent chacun indépendamment un groupe alkyle présentant 1 à 20 atomes de carbone, un groupe alicyclique substitué ou non substitué présentant 3 à 20 atomes de carbone de cycle, un groupe aromatique substitué ou non substitué présentant 6 à 24 atomes de carbone de cycle, un groupe acyle présentant 2 à 20 atomes de carbone, ou un groupe hydrocarboné contenant de l'oxygène présentant 2 à 50 atomes de carbone, dans le cas où les formules présentent plusieurs R^{1c}, R^{2c}, R^{3c}, R^{4c}, R^{5c} et R^{6C}, ceux-ci peuvent être identiques ou différents dans chaque motif de structure,
X^{c} et Y^{c} représentent chacun indépendamment un atome d'hydrogène, un groupe hydroxyle, ou un groupe hydrocarboné présentant 1 à 20 atomes de carbone,
v représente un nombre égal à 1 ou plus, u représente un nombre égal à 0 ou plus, w représente un nombre égal à 1 ou plus, et x et y représentent chacun indépendamment un nombre égal à 1 ou plus.

6. Composition selon la revendication 1, dans laquelle l'ester de polyol est un ester d'un diol ou d'un polyol présentant 3 à 20 groupes hydroxyle avec un acide gras présentant 3 à 20 atomes de carbone.

7. Composition selon l'une quelconque des revendications 1 à 6, dans laquelle la résistivité en volume de l'huile de base (P) est de 0,01 TΩ.m ou plus, mesurée conformément au JIS C 2101:2010.

8. Composition selon l'une quelconque des revendications 1 à 7, dans laquelle la tension superficielle de l'huile de base (P) est de 0,02 à 0,04 N/m, mesurée conformément au JIS K 2241:2000.

9. Composition selon l'une quelconque des revendications 1 à 8, comprenant un ou plusieurs additifs sélectionnés dans le groupe consistant en un agent extrême pression, un antioxydant, un piégeur d'acide, un piégeur d'oxygène, un désactivateur de métal, un inhibiteur de rouille, un agent huileux et un agent anti-mousse.

10. Composition selon l'une quelconque des revendications 1 à 9, qui est une composition d'huile pour réfrigérateur pour un réfrigérant contenant un hydrofluorocarbure, avec le composé fluoré insaturé présentant une liaison insaturée carbone-carbone, qui est représenté par la formule générale (I).

11. Utilisation de la composition telle que définie dans l'une quelconque des revendications 1 à 10, pour un climatiseur, une pompe à chaleur à gaz, un réfrigérateur, un distributeur automatique, une vitrine, un chauffe-eau ou un système de chauffage par le sol.
